(19) Europäisches Patentamt
European Patent Office
Office européen des brevets

(11) **EP 3 329 216 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **16733965.4**

(22) Anmeldetag: **01.07.2016**

(51) Internationale Patentklassifikation (IPC):
**G01C 21/36** (2006.01)   **G01C 21/30** (2006.01)

(52) Gemeinsame Patentklassifikation (CPC):
**G01C 21/30; G01C 21/3602**

(86) Internationale Anmeldenummer:
**PCT/EP2016/065531**

(87) Internationale Veröffentlichungsnummer:
**WO 2017/016799 (02.02.2017 Gazette 2017/05)**

(54) **BESTIMMUNG EINER ANORDNUNGSINFORMATION FÜR EIN FAHRZEUG**

DETERMINING ARRANGEMENT INFORMATION FOR A VEHICLE

DÉTERMINATION D'UNE INFORMATION DE DISPOSITION POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 DE 102015214338**

(43) Veröffentlichungstag der Anmeldung:
**06.06.2018 Patentblatt 2018/23**

(73) Patentinhaber: **Volkswagen Aktiengesellschaft 38440 Wolfsburg (DE)**

(72) Erfinder:
• **HEIDENREICH, Toni**
**Devan Grove**
**N4 2GR London (GB)**
• **SPEHR, Jens**
**38226 Salzgitter (DE)**

(56) Entgegenhaltungen:
**US-A1- 2013 162 824    US-A1- 2014 093 131**
**US-A1- 2014 343 842**

• **SCHINDLER ANDREAS: "Vehicle self-localization with high-precision digital maps", 2013 IEEE INTELLIGENT VEHICLES SYMPOSIUM WORKSHOPS (IV WORKSHOPS), IEEE, 23 June 2013 (2013-06-23), pages 134 - 139, XP032491728, [retrieved on 20130927], DOI: 10.1109/IV WORKSHOPS.2013.6615239**

• **SCHREIBER MARKUS ET AL: "LaneLoc: Lane marking based localization using highly accurate maps", 2013 IEEE INTELLIGENT VEHICLES SYMPOSIUM (IV), IEEE, 23 June 2013 (2013-06-23), pages 449 - 454, XP032501902, ISSN: 1931-0587, [retrieved on 20131010], DOI: 10.1109/IVS.2013.6629509**

• **WEI LIJUN ET AL: "Augmenting Vehicle Localization Accuracy with Cameras and 3D Road Infrastructure Database", 19 March 2015, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 194 - 2, ISBN: 978-3-642-17318-9, XP047339440**

• **TAO Z ET AL: "Mapping and localization using GPS, lane markings and proprioceptive sensors", 2013 IEEE/RSJ INTERNATIONAL CONFERENCE ON INTELLIGENT ROBOTS AND SYSTEMS(ROS), IEEE, 3 November 2013 (2013-11-03), pages 406 - 412, XP032537362, ISSN: 2153-0858, [retrieved on 20131226], DOI: 10.1109/IROS.2013.6696383**

• **GRUYER DOMINIQUE ET AL: "Map-aided localization with lateral perception", 2014 IEEE INTELLIGENT VEHICLES SYMPOSIUM PROCEEDINGS, IEEE, 8 June 2014 (2014-06-08), pages 674 - 680, XP032620378, [retrieved on 20140715], DOI: 10.1109/IVS.2014.6856528**

- **WU TAO ET AL: "Vehicle localization using road markings", 2013 IEEE INTELLIGENT VEHICLES SYMPOSIUM (IV), IEEE, 23 June 2013 (2013-06-23), pages 1185 - 1190, XP032501999, ISSN: 1931-0587, [retrieved on 20131010], DOI: 10.1109/IVS.2013.6629627**

**Beschreibung**

Die vorliegende Erfindung betrifft ein Verfahren zur Bestimmung einer Anordnungsinformation für ein Fahrzeug, insbesondere die Bestimmung einer Anordnung eines Fahrzeugs unter Berücksichtigung einer fahrstreifengenauen Karteninformation bei gleichzeitiger Verbesserung einer Annahme oder Hypothese zur Anordnung der Fahrstreifen. Die vorliegende Erfindung kann insbesondere in Verbindung mit Fahrerassistenzsystemen verwendet werden, welche eine automatische Führung des Fahrzeugs in einer Längs- und/oder Querrichtung ermöglichen oder unterstützen.

Für die Bereitstellung automatischer Fahrfunktionen für Fahrerassistenzsysteme von Fahrzeugen, beispielsweise Personenkraftwagen oder Lastkraftwagen, wird ein umfassendes Wissen über die aktuelle Umgebung des Fahrzeugs benötigt. Ein wichtiger Aspekt dieser Umgebung ist die Fahrbahninfrastruktur im Nahbereich vor dem Fahrzeug, in welchem ein automatisches Fahrverhalten des Fahrzeugs zu planen ist. Zur Ermittlung der wahrscheinlichsten Fahrbahninfrastruktur können verschiedene Arten von Informationsquellen verwendet werden, beispielsweise ein Vorwissen aus fahrstreifengenauen Straßenkarten in Kombination mit einem globalen Ortungssystem (GPS) sowie eine Sensor-basierte Wahrnehmung von Fahrstreifen, beispielsweise mithilfe von Kameras. Ein Problem ist, dass alle Datenquellen, beispielsweise die Karte, die globale Ortung und die Fahrstreifenwahrnehmung, mit topologischen und geometrischen Unsicherheiten und Messfehlern verschiedenster Art behaftet sein können. Für ein einheitliches und in sich kongruentes Bild der Umgebung sind unter Berücksichtigung aller Datenquellen und deren Fehler die wahrscheinlichste Position und Ausrichtung relativ zu der Karte und die wahrscheinlichsten Fahrstreifen zu bestimmen.

In diesem Zusammenhang offenbart die DE 10 2011 120 497 A1 ein System zur präzisen Fahrzeugpositionsbestimmung innerhalb einer Fahrspur. Das Verfahren wird von einem Fahrzeug ausgeführt, welches einen Bordcomputer, Fahrzeugsensoren, eine Satellitenpositionsbestimmungseinheit und eine Datenbank mit einer Karte auf der Ebene von Fahrspuren aufweist, um unter Verwendung eines Kartenabgleichs eine neue Stellung des Fahrzeugs zu bestimmen. Bei dem Verfahren werden neue Daten von wenigstens einem der Fahrzeugsensoren empfangen und Messwerte von den Fahrzeugsensoren erhoben. Der Bordcomputer berechnet die Fortpflanzung der Fahrzeugstellung in Bezug auf aufeinanderfolgende Zeitpunkte. Ferner führt der Bordcomputer einen Kurvenanpassungsprozess aus, bei welchem beispielsweise GPS-Koordinaten des Fahrzeugs erhalten werden und der Ort des Fahrzeugs innerhalb der Karte auf der Ebene von Fahrspuren identifiziert wird. Der Bordcomputer führt ein Nachführungsprogramm aus, welches das Verwenden einer Wahrscheinlichkeitsverteilung zum Aktualisieren der Fahrzeugstellung hinsichtlich Datenpartikeln enthält, und führt auf der Grundlage der Datenpartikel ein Partikelfilterungs-Programm aus, um die neue Fahrzeugstellung zu berechnen. Auf der Grundlage von Ergebnissen des Kurvenanpassungsprozesses wird ein Beobachtungsmodell aktualisiert. Dabei werden Daten von der Karte auf der Ebene von Fahrspuren, die wenigstens eine registrierte Fahrspurlinie in der Nähe des Fahrzeugs identifiziert, ausgelesen und eine Position der Fahrspurlinie in Bezug auf ein Bezugsystem des Trägerfahrzeugs berechnet. Unter Verwendung einer Entfernungsanalyse werden die detektierten und registrierten Fahrspurstreifen und -begrenzungen abgeglichen und unter Verwendung der abgeglichenen Daten wird eine Beobachtungswahrscheinlichkeitsverteilung in Bezug auf Bilderkennungsdaten von einer Kamera der Fahrzeugsensoren berechnet. Beim Berechnen einer Position der Fahrspurlinie in Bezug auf ein Bezugsystem des Trägerfahrzeugs werden die aus einem Koordinatensystem der Karte auf der Ebene von Fahrspuren beschafften Fahrspurstreifen auf das Bezugssystems des Fahrzeugs projiziert und die detektierten und registrierten Fahrspurstreifen und -begrenzungen abgeglichen, wobei eine Analyse vom euklidischen Typ der Entfernung als die Entfernungsanalyse verwendet wird.

Die DE 10 2010 033 729 B4 betrifft ein Verfahren zum Bestimmen der Position eines Fahrzeugs auf einer Fahrbahn. Bei dem Verfahren wird die Position des Fahrzeugs mit einer ersten Genauigkeit anhand von Ausgaben eines Satellitensignalsensors bestimmt. Aus einer digitalen Karte werden Daten zu einem ersten Fahrzeugumfeld für die mit der ersten Genauigkeit bestimmte Position gewonnen. Ferner werden Daten zu Fahrspurmarkierungen in einem zweiten Fahrzeugumfeld mit einem Linienerkennungssensor gewonnen. Daten zur Eigenbewegung des Fahrzeugs werden mit einem Fahrdynamiksensor gewonnen und Daten zu Objekten in einem dritten Fahrzeugumfeld mit einem Umfeldsensor gewonnen. Die Position des Fahrzeugs mit zumindest fahrspurspezifischer Genauigkeit auf der Fahrbahn wird durch Kombination der Daten zu dem ersten Fahrzeugumfeld aus der digitalen Karte und der Daten zu den Fahrspurmarkierungen in dem zweiten Fahrzeugumfeld mit den Daten zur Eigenbewegung des Fahrzeugs oder den Daten zu Objekten in dem dritten Fahrzeugumfeld in Abhängigkeit von der Fahrbahnsituation bestimmt.

Die Veröffentlichung von Tao Wu und Ananth Ranganathan "Vehicle localization using road markings", 2013 IEEE Intelligent Vehicles Symposium (IV), 23. Juni 2013, Seiten 1185-1190, XP032501999, ISSN: 1931-0587, DOI: 10.1109/IVS.2013.6629627 betrifft eine Fahrzeugpositionsbestimmung unter Verwendung von Straßenmarkierungen.

Beim Zusammenführen von Informationen aus Kartendaten, Ortung (zum Beispiel GPS) und Fahrstreifenwahrnehmung wird üblicherweise davon ausgegangen, dass ein Teil der Daten fehler- und unsicherheitsfrei vorliegt. Dies trifft jedoch im Allgemeinen nicht zu, so dass diese Annahme zu einer ungenauen Bestimmung der Position und/oder Ausrichtung des Fahrzeugs in Bezug auf die tatsächliche Fahrbahn führt. Insbesondere bei Fahrerassistenzsystemen, welche das Fahrzeug automatisch auf der Fahrbahn steuern, sind jedoch insbesondere im Nahbereich derartige Ungenauigkeiten unerwünscht.

Aufgabe der vorliegenden Erfindung ist es daher, eine zuverlässigere Bestimmung der Position und Ausrichtung des Fahrzeugs in Bezug zu der tatsächlichen Fahrbahn zu ermöglichen. Diese Aufgabe wird gemäß der vorliegenden Erfindung durch ein Verfahren zur Bestimmung einer Anordnungsinformation für ein Fahrzeug nach Anspruch 1, und eine Anordnungsbestimmungsvorrichtung nach Anspruch 10 gelöst. Die abhängigen Ansprüche definieren bevorzugte und vorteilhafte Ausführungsformen der Erfindung. Gemäß der vorliegenden Erfindung wird ein Verfahren zum Bestimmen einer Anordnungsinformation für ein Fahrzeug bereitgestellt. Der Begriff "Anordnungsinformation" betrifft eine Position des Fahrzeugs und eine Ausrichtung des Fahrzeugs in Bezug auf ein stationäres Koordinatensystem, wie zum Beispiel ein weltumspannendes globales Koordinatensystem wie zum Beispiel das World Geodetic System (abgekürzt WGS). Das stationäre Koordinatensystem kann jedoch auch ein beliebiges anderes Koordinatensystem außerhalb des Fahrzeugs umfassen, wie zum Beispiel ein länderspezifisches Koordinatensystem. Im Zusammenhang mit der vorliegenden Erfindung wird der Begriff "Anordnungsinformation" auch als "Pose" bezeichnet, und umfasst zumindest eine zweidimensionale Position in dem stationären Koordinatensystem sowie eine Ausrichtung des Fahrzeugs in Bezug auf das stationäre Koordinatensystem. Bei dem Verfahren wird eine lokale Fahrstreifenanordnung in einer Umgebung des Fahrzeugs mit Sensoren des Fahrzeugs erfasst. Die Fahrstreifenanordnung kann beispielsweise mithilfe von Kameras des Fahrzeugs erfasst werden. Die lokale Fahrstreifenanordnung gibt eine Anordnung von Fahrstreifen in der Umgebung des Fahrzeugs in Bezug auf das Fahrzeug an. In Abhängigkeit von der lokalen Fahrstreifenanordnung und einer zuvor bestimmten Anordnungsinformation für das Fahrzeug wird eine erste Fahrstreifenanordnung bestimmt. Die erste Fahrstreifenanordnung gibt eine Anordnung von Fahrstreifen in der Umgebung des Fahrzeugs in Bezug auf das stationäre Koordinatensystem an. Anders ausgedrückt wird aus der lokalen Fahrstreifenanordnung, welche sich aus Sicht oder Wahrnehmung des Fahrzeugs ergibt, eine (erste) Fahrstreifenanordnung in Bezug auf das stationäre Koordinatensystem bestimmt. In Abhängigkeit von vorgegebenem Kartenmaterial wird eine zweite Fahrstreifenanordnung für die aktuelle Umgebung des Fahrzeugs in Bezug auf das stationäre Koordinatensystem und der zuvor bestimmten Anordnungsinformation für das Fahrzeug bestimmt. Auf der Grundlage einer geometrischen Ähnlichkeit der ersten Fahrstreifenanordnung und der zweiten Fahrstreifenanordnung wird eine Ähnlichkeitsinformation bestimmt und die zuvor bestimmte Anordnungsinformation für das Fahrzeug in Abhängigkeit von der Ähnlichkeitsinformation und von Odometriedaten des Fahrzeugs aktualisiert. Beispielsweise können Verschiebungen erforderlich sein, um die erste Fahrstreifenanordnung auf die zweite Fahrstreifenanordnung abzubilden. Anhand dieser Verschiebungen kann die Anordnungsinformation oder Pose für das Fahrzeug aktualisiert werden. Durch die Bestimmung der geometrischen Ähnlichkeit zwischen der in der Umgebung des Fahrzeugs erfassten Fahrstreifenanordnung und der Karten-basierten Fahrstreifenanordnung können Sensor-basierte und Karten-basierte Fahrstreifendaten gleichermaßen zur Aktualisierung der Anordnungsinformation für das Fahrzeug beitragen.

Bei einer Ausführungsform wird ferner eine zuvor bestimmte Fahrstreifenanordnungshypothese in Abhängigkeit von der Ähnlichkeitsinformation aktualisiert. Die Fahrstreifenanordnungshypothese gibt eine Hypothese für eine Anordnung von Fahrstreifen in der Umgebung des Fahrzeugs in Bezug auf das stationäre Koordinatensystem an. Somit können auf der Grundlage der geometrischen Ähnlichkeit der ersten und zweiten Fahrstreifenanordnung sowohl die Anordnungsinformation, also eine Posenschätzung für das Fahrzeug, als auch eine Fahrstreifenanordnungshypothese gemeinsam aktualisiert und optimiert werden.

Bei einer weiteren Ausführungsform umfasst die Anordnungsinformation des Fahrzeugs Parameter einer mehrdimensionalen Normalverteilung für die Position und Ausrichtung des Fahrzeugs. Beispielsweise kann die Position eine zweidimensionale Normalverteilung für die Position des Fahrzeugs in einem kartesischen Koordinatensystem umfassen und die Ausrichtung eine weitere Normalverteilung für einen Drehwinkel des Fahrzeugs bezogen auf eine vorgegebene Ausrichtung des Koordinatensystems umfassen. Koordinaten der Fahrstreifenanordnuingshypothese, beispielsweise Punkte entlang einer Fahrstreifenmitte, können ebenfalls als mehrdimensionale Normalverteilungen dargestellt werden. Die Parameter einer jeden dieser Normalverteilungen können beispielsweise einen Erwartungswert und eine Varianz umfassen. Indem die Anordnungsinformation und/oder die Fahrstreifenanordnungshypothese jeweils auf einem Normalverteilungs-basierten Darstellungsansatz beruhen, können Fehler und Ungenauigkeiten bei der zugeordneten Erfassung von Eingangsdaten modelliert und berücksichtigt werden. Insbesondere können auch Fehler oder Ungenauigkeiten der Karten-basierten Fahrstreifenanordnung berücksichtigt werden. Außerdem können alle Sensor-basierten Eingangsdaten mit kostengünstigen Sensoren erfasst werden, da die jeweiligen Unsicherheiten mit den Normalverteilungen direkt in die Berechnung einbezogen werden können.

Ein Fahrstreifen einer Fahrstreifenanordnung wird durch eine die Fahrstreifenmitte darstellende Punktliste dargestellt. Jeder Punkt der Punktliste weist Parameter einer mehrdimensionalen Normalverteilung für eine Position in Bezug auf das stationäre Koordinatensystem auf. Kartenmaterial, welches Punktlisten umfasst, die die Mitte von Fahrstreifen markieren, ist üblicherweise verfügbar und kann daher in vorteilhafter Weise bei dem Verfahren verwendet werden. Indem jeder Punkt der Punktliste als Normalverteilung dargestellt wird, können Unsicherheiten des Kartenmaterials berücksichtigt werden. Beispielsweise können die durch das Kartenmaterial angegebenen Koordinaten in jeder Dimension als die Erwartungswerte der Normalverteilung in der jeweiligen Dimension verwendet werden. Eine Standardabweichung der Normalverteilung in der jeweiligen Dimension kann beispielsweise anhand der Kartengenauigkeit gewählt werden. Anhand einer Verbindung von zwei oder mehreren aufeinanderfolgenden Punkten der Punktliste kann eine gewünschte Ausrichtung eines Fahrzeugs auf einem Fahrstreifen ermittelt werden. Dadurch kann die in Abhängigkeit von dem vorgegebenen Kartenmaterial bestimmte zweite Fahrstreifenanordnung sowohl zur Aktualisierung der Position als auch zur Aktualisierung der Ausrichtung des Fahrzeugs beitragen.

Die zuvor bestimmte Anordnungsinformation für das Fahrzeug wird in Abhängigkeit von Odometriedaten des Fahrzeugs aktualisiert. Die Odometriedaten des Fahrzeugs können beispielsweise Informationen von Radsensoren, Lenkwinkelsensoren oder Beschleunigungssensoren des Fahrzeugs umfassen. Mit den Odometriedaten kann eine relative Anordnungsänderung des Fahrzeugs in Bezug auf eine vorhergehende Position bestimmt werden. Auf der Grundlage der zuvor bestimmten Anordnungsinformation kann beispielsweise eine aktuelle Anordnungsinformation durch Einbeziehen der Odometriedaten bestimmt werden, wobei Ungenauigkeiten der zuvor bestimmten Anordnungsinformation und Messungenauigkeiten der Odometriedaten in Form von Normalverteilungen berücksichtigt werden können. Dadurch können die Odometriedaten des Fahrzeugs einschließlich ihrer möglichen Fehler bei der Aktualisierung der Anordnungsinformation für das Fahrzeug berücksichtigt werden.

Ferner wird eine stationäre Position des Fahrzeugs erfasst. Die stationäre Position gibt eine Position des Fahrzeugs in Bezug auf das stationäre Koordinatensystem an. Das stationäre Koordinatensystem kann beispielsweise ein globales Koordinatensystem sein, wobei die stationäre Position beispielsweise mithilfe eines Satellitenpositionsbestimmungssystems erfasst wird. Die zuvor bestimmte Anordnungsinformation für das Fahrzeug wird in Abhängigkeit von der erfassten stationären Position des Fahrzeugs aktualisiert. Da die erfasste stationäre Position des Fahrzeugs eine Messungenauigkeit aufweisen kann, kann die stationäre Position des Fahrzeugs in Form einer mehrdimensionalen Normalverteilung bei der Aktualisierung der zuvor bestimmten Anordnungsinformation berücksichtigt werden.

Mit dem zuvor beschriebenen Normalverteilungs-basierten Darstellungsansatz für die Anordnungsinformation für das Fahrzeug und die zusätzlichen Informationen zur Aktualisierung der Anordnungsinformation für das Fahrzeug, wie zum Beispiel Odometriedaten, Informationen des Kartenmaterials, Kamera-basierte Umgebungsinformationen und Satelliten-basierte Positionsbestimmungsinformationen, können diese mit Messfehlern behafteten Informationen auf einfache Art und Weise einschließlich ihrer möglichen Fehler zur Aktualisierung der Anordnungsinformation für das Fahrzeug verrechnet werden. Insbesondere erlaubt der Normalverteilungsbasierte Darstellungsansatz eine Aktualisierung der Anordnungsinformation innerhalb weniger Millisekunden auf einem üblichen Rechensystem, wie zum Beispiel einer Mikroprozessorsteuerung in einem Fahrzeug, und ist damit echtzeitfähig für die Berechnung im Fahrzeug geeignet. Eine Wiederholungsrate für das wiederholte Durchführen des Verfahrens kann beispielsweise in einem Bereich von 25 bis 400 Wiederholungen pro Sekunde liegen.

Bei einer weiteren Ausführungsform können zusätzliche Merkmale in der Umgebung des Fahrzeugs mit entsprechenden Merkmalen des Kartenmaterials verglichen werden, um die Ähnlichkeitsinformation zu bestimmen. Dazu werden Fahrstreifeninformationen für die erste Fahrstreifenanordnung mittels der Sensoren des Fahrzeugs bestimmt. Die Fahrstreifeninformationen umfassen beispielsweise Fahrbahnmarkierungstypen, Stopplinienpositionen oder Verkehrsschildpositionen. Fahrbahnmarkierungstypen können beispielsweise eine durchgezogene Fahrbahnmarkierung, eine unterbrochene Fahrbahnmarkierung, eine doppelte durchgezogene Linie und dergleichen umfassen. Die Fahrstreifeninformationen für die erste Fahrstreifenanordnung werden mit Kartenmaterial-basierten Fahrstreifeninformationen für die zweite Fahrstreifenanordnung verglichen. Dadurch kann die Zuordnung der mittels der Sensoren des Fahrzeugs erfassten Fahrstreifen zu Fahrstreifen aus dem Kartenmaterial verbessert werden.

Bei einer weiteren Ausführungsform umfasst die erste Fahrstreifenanordnung eine Anordnung von mindestens zwei Fahrstreifen und alternativ oder zusätzlich umfasst die zweite Fahrstreifenanordnung eine Anordnung von mindestens zwei Fahrstreifen. Zum Bestimmen der Ähnlichkeitsinformation werden mehrere Paarähnlichkeitsinformationen bestimmt. Jede der mehreren Paarähnlichkeitsinformationen wird in Abhängigkeit von einer geometrischen Ähnlichkeit eines jeweiligen Paars von zwei Fahrstreifen bestimmt. Ein jeweiliges Paar von zwei Fahrstreifen umfasst jeweils einen Fahrstreifen aus der ersten Fahrstreifenanordnung und einen Fahrstreifen aus der zweiten Fahrstreifenanordnung. Anders ausgedrückt wird jeweils eine Paarähnlichkeitsinformation für jede Kombination von einem Fahrstreifen aus der ersten Fahrstreifenanordnung und einem Fahrstreifen aus der zweiten Fahrstreifenanordnung bestimmt. Wenn beispielsweise die erste Fahrstreifenanordnung zwei Fahrstreifen umfasst und die zweite Fahrstreifenanordnung ebenfalls zwei Fahrstreifen umfasst, so werden vier Paarähnlichkeitsinformationen bestimmt, nämlich eine erste für eine Ähnlichkeit zwischen einem ersten Fahrstreifen der ersten Fahrstreifenanordnung und einem ersten Fahrstreifen der zweiten Fahrstreifenanordnung, eine zweite Paarähnlichkeitsinformation für eine geometrische Ähnlichkeit des ersten Fahrstreifens der ersten Fahrstreifenanordnung und des zweiten Fahrstreifens der zweiten Fahrstreifenanordnung, eine dritte Paarähnlichkeitsinformation für eine geometrische Ähnlichkeit zwischen einem zweiten Fahrstreifen der ersten Fahrstreifenanordnung und dem ersten Fahrstreifen der zweiten Fahrstreifenanordnung und eine vierte Paarähnlichkeitsinformation für eine geometrische Ähnlichkeit zwischen dem zweiten Fahrstreifen der ersten Fahrstreifenanordnung und dem zweiten Fahrstreifen der zweiten Fahrstreifenanordnung. Indem eine beliebige Anzahl von Fahrstreifen verarbeitet werden, können auch in komplexen Szenarien, wie zum Beispiel Kreuzungen oder Abfahrten, die Anordnungsinformation für das Fahrzeug und die Fahrstreifenanordnungshypothese aktualisiert werden. Beispielsweise kann das Aktualisieren der zuvor bestimmten Anordnungsinformation für das Fahrzeug in Abhängigkeit von der Ähnlichkeitsinformation durchgeführt werden, indem für eine jeweilige Paarähnlichkeitsinformation der mehreren Paarähnlichkeitsinformationen eine jeweilige gewichtete Aktualisierungsinformation in Abhängigkeit von der jeweiligen Paarähnlichkeitsinformation bestimmt wird. Die gewichtete Aktualisierungsinformation umfasst eine Anordnungsinformation für das Fahrzeug unter der Annahme, dass die Fahrstreifen des jeweiligen Paars denselben tatsächlichen Fahrstreifen betreffen. Das Gewicht der gewichteten Aktualisierungsinformation gibt eine Wahrscheinlichkeit an, dass die Fahrstreifen des jeweiligen Paars denselben tatsächlichen Fahrstreifen betreffen. Die Aktualisierung der zuvor bestimmten Anordnungsinformation erfolgt in Abhängigkeit von den gewichteten Aktualisierungsinformationen, indem beispielsweise eine Aktualisierung aufgrund einer Paarähnlichkeitsinformation mit dem Gewicht multipliziert wird. Die Anordnungsinformation des Fahrzeugs und die gewichteten Aktualisierungsinformationen können insbesondere jeweils Parameter einer mehrdimensionalen Normalverteilung für die Position und Ausrichtung des Fahrzeugs umfassen. Zum Aktualisieren der zuvor bestimmten Anordnungsinformationen für das Fahrzeug wird die Normalverteilung der Anordnungsinformation mit den Normalverteilungen der Aktualisierungsinformationen multipliziert. Dadurch kann auch in komplexen Situationen und Szenarien, wie zum Beispiel mehrspurigen Fahrbahnen, Kreuzungen und Abfahrten, die Anordnungsinformation für das Fahrzeug auf einfache Art und Weise aktualisiert werden.

Gemäß der vorliegenden Erfindung wird ferner eine Anordnungsbestimmungsvorrichtung zur Bestimmung einer Anordnungsinformation für ein Fahrzeug bereitgestellt. Die Anordnungsinformation umfasst eine Position des Fahrzeugs und eine Ausrichtung des Fahrzeugs in Position auf ein stationäres oder globales Koordinatensystem. Die Anordnungsbestimmungsvorrichtung umfasst Sensoren zum Erfassen einer lokalen Fahrstreifenanordnung in einer Umgebung des Fahrzeugs. Die Sensoren können beispielsweise Kameras des Fahrzeugs umfassen. Die lokale Fahrstreifenanordnung gibt eine Anordnung von Fahrstreifen in der Umgebung des Fahrzeugs in Bezug auf das Fahrzeug an und kann beispielsweise aus Bilddaten der Kamera, optischen Eigenschaften der Kamera und einer Anordnung der Kamera durch eine geeignete Bildverarbeitung ermittelt werden. Die Anordnungsbestimmungsvorrichtung umfasst ferner eine Verarbeitungsvorrichtung, welche in der Lage ist, eine erste Fahrstreifenanordnung in Abhängigkeit von der lokalen Fahrstreifenanordnung und einer zuvor bestimmten Anordnungsinformation für das Fahrzeug zu bestimmen. Die erste Fahrstreifenanordnung gibt eine Anordnung von Fahrstreifen in der Umgebung des Fahrzeugs in Bezug auf das stationäre Koordinatensystem an. Anders ausgedrückt rechnet die Verarbeitungsvorrichtung die lokale Fahrstreifenanordnung unter Berücksichtigung der zuletzt bestimmten Anordnungsinformation oder Pose für das Fahrzeug in eine entsprechende globale Fahrstreifenanordnung um. Die Verarbeitungsvorrichtung ist ferner in der Lage, eine zweite Fahrstreifenanordnung in Abhängigkeit von vorgegebenem Kartenmaterial und der zuvor bestimmten Anordnungsinformation für das Fahrzeug zu bestimmen. Die zweite Fahrstreifenanordnung gibt eine Anordnung von Fahrstreifen in der Umgebung des Fahrzeugs in Bezug auf das stationäre Koordinatensystem an. Die zweite Fahrstreifenanordnung kann beispielsweise unter Verwendung der zuvor bestimmten Anordnungsinformation für das Fahrzeug aus dem vorgegebenen Kartenmaterial ermittelt werden. Schließlich bestimmt die Verarbeitungsvorrichtung eine Ähnlichkeitsinformation in Abhängigkeit von einer geometrischen Ähnlichkeit der ersten Fahrstreifenanordnung und der zweiten Fahrstreifenanordnung. Diese Ähnlichkeitsinformation und Odometriedaten des Fahrzeugs werden verwendet, um die zuvor bestimmte Anordnungsinformation für das Fahrzeug zu aktualisieren. Somit ist die Anordnungsbestimmungsvorrichtung zur Durchführung des zuvor beschriebenen Verfahrens oder einer seiner Ausführungsformen geeignet und umfasst daher auch die im Zusammenhang mit dem Verfahren beschriebenen Vorteile.

Die vorliegende Erfindung betrifft weiterhin ein Fahrzeug, welches die zuvor beschriebene Anordnungsbestimmungsvorrichtung und ein Fahrerassistenzsystem umfasst. Das Fahrerassistenzsystem stellt eine automatische Fahrfunktion für das Fahrzeug bereit, beispielsweise eine automatische Längs- und Querregelung des Fahrzeugs. Das Fahrerassistenzsystem ist mit der Anordnungsbestimmungsvorrichtung gekoppelt und die automatische Fahrfunktion wird auf der Grundlage der aktualisieren Anordnungsinformation von der Anordnungsbestimmungsvorrichtung ausgeführt. Das Fahrzeug umfasst daher ebenfalls die zuvor im Zusammenhang mit dem Verfahren und seinen Ausführungsformen beschriebenen Vorteile.

Wie zuvor beschrieben, kann eine zuvor bestimmte Fahrstreifenanordnungshypothese in Abhängigkeit von der Ähnlichkeitsinformation aktualisiert werden. Die Fahrstreifenanordnungshypothese gibt eine Hypothese für eine Anordnung von Fahrstreifen in der Umgebung des Fahrzeugs in Bezug auf das stationäre Koordinatensystem an. Die aktualisierte Fahrstreifenanordnungshypothese kann von dem Fahrerassistenzsystem bei der Ausführung der automatischen Fahrfunktion berücksichtigt werden, indem beispielsweise die Anordnungsinformation oder Pose des Fahrzeugs zu der aktualisierten Fahrstreifenanordnungshypothese in Bezug gesetzt wird und insbesondere eine Querregelung des Fahrzeugs auf dieser Grundlage gesteuert wird.

Obwohl die zuvor beschriebenen Ausführungsformen der vorliegenden Erfindung unabhängig voneinander beschrieben wurden, ist es klar, dass diese Ausführungsformen beliebig miteinander kombiniert werden können.

Die vorliegende Erfindung wird nachfolgend unter Bezugnahme auf die Zeichnungen im Detail beschrieben werden.

Fig. 1 zeigt schematisch ein Fahrzeug gemäß einer Ausführungsform der vorliegenden Erfindung.

Fig. 2 zeigt Schritte eines Verfahrens zur Bestimmung einer Anordnungsinformation für ein Fahrzeug gemäß einer Ausführungsform der vorliegenden Erfindung.

Fig. 3 zeigt ein Beispiel für eine graphische Darstellung eines Faktorgraphen, welcher zur Bestimmung einer Anordnungsinformation für ein Fahrzeug gemäß einer Ausführungsform verwendet werden kann.

Fig. 4 zeigt eine schematische Darstellung eines Aktualisierungszyklus für eine Fahrstreifenhypothese und eine Posenhypothese gemäß einer Ausführungsform der vorliegenden Erfindung.

Fig. 5 zeigt einen Faktorgraph für eine Fahrstreifenzuordnung gemäß einer Ausführungsform der vorliegenden Erfindung.

Fig. 6 zeigt einen mittleren Positionsbestimmungsfehler für verschiedene Quellen und Größen von Störungen.

Fig. 7 zeigt schematisch Karten-basierte Fahrstreifenanordnungen, lokal erfasste Fahrstreifenanordnungen und daraus berechnete Posen für ein Fahrzeug.

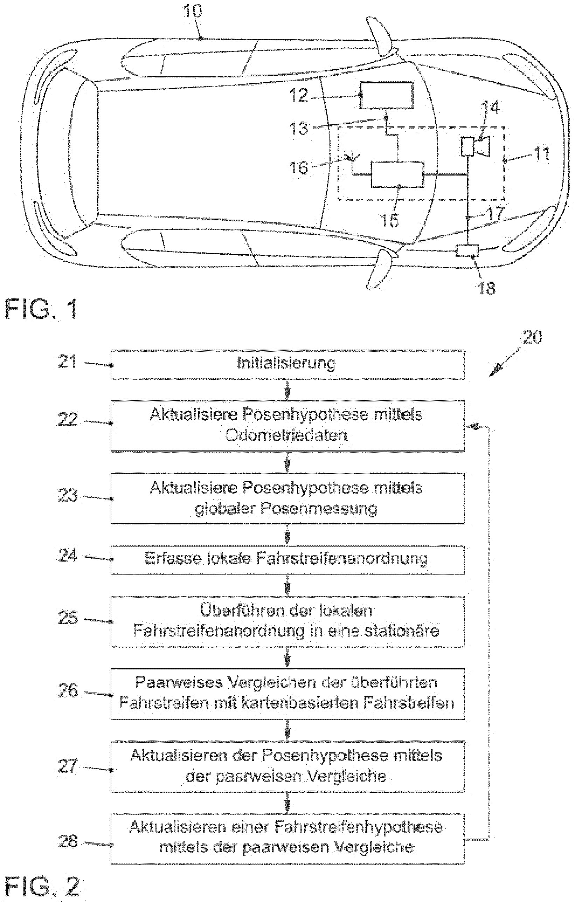

Fig. 1 zeigt ein Fahrzeug 10 mit einer Anordnungsbestimmungsvorrichtung 11 und einem Fahrerassistenzsystem 12. Das Fahrerassistenzsystem 12 ist in der Lage, eine automatische Fahrfunktion für das Fahrzeug 10 auszuführen. Dazu benötigt das Fahrerassistenzsystem 12 eine Information, auf welchem Fahrstreifen sich das Fahrzeug 10 aktuell befindet und wie eine aktuelle Position des Fahrzeugs 10 in Bezug auf den Fahrstreifen ist. Diese Informationen stellt die Anordnungsbestimmungsvorrichtung 11 über eine Verbindung 13 zur Verfügung. Die Anordnungsbestimmungsvorrichtung 11 umfasst einen Sensor 14, beispielsweise eine Kamera oder mehrere Kameras, zum Erfassen einer lokalen Fahrstreifenanordnung in einer Umgebung des Fahrzeugs 10. Die lokale Fahrstreifenanordnung kann beispielsweise mithilfe einer geeigneten Bildverarbeitung unter Berücksichtigung der Anordnung der Kamera 14 an dem Fahrzeug 10 von einer Verarbeitungsvorrichtung 15 der Anordnungsbestimmungsvorrichtung 11 berechnet werden. Die Verarbeitungsvorrichtung 15 ist ferner mit einem globalen Positionsbestimmungssystem ausgestattet, welches beispielsweise über eine Antenne 16 Signale von Satelliten empfängt und daraus eine globale Position des Fahrzeugs 10 berechnet. Die Verarbeitungsvorrichtung 15 kann ferner über einen Fahrzeugbus 17 mit weiteren Komponenten des Fahrzeugs 10 verbunden sein, welche Odometriedaten des Fahrzeugs bereitstellen. Beispielsweise kann die Verarbeitungsvorrichtung 15 Informationen von einem Radsensor 18 empfangen, um eine Bewegung des Fahrzeugs 10 zu bestimmen. Alternativ oder zusätzlich können weitere Radsensoren, Beschleunigungssensoren oder ein Lenkwinkelsensor mit der Verarbeitungsvorrichtung 15 zur Berechnung von Odometriedaten des Fahrzeugs 10 gekoppelt sein.

Für die Bereitstellung einer automatischen Fahrfunktion von dem Fahrerassistenzsystem 12 benötigt das Fahrerassistenzsystem 12 ein umfassendes Wissen über die aktuelle Umgebung des Fahrzeugs 10 sowie die eigene Position und Ausrichtung des Fahrzeugs 10 in der aktuellen Umgebung. Ein wichtiger Aspekt dieser Umgebung ist die Fahrbahninfrastruktur im Nahbereich vor dem Fahrzeug 10, da in diesem Bereich das automatische Verhalten des Fahrzeugs, beispielsweise eine Längs- und Querregelung des Fahrzeugs, zu planen ist. Zur Ermittlung der wahrscheinlichsten Fahrbahninfrastruktur werden verschiedene Arten von Informationsquellen von der Anordnungsbestimmungsvorrichtung 11 verwendet: Vorwissen aus fahrstreifengenauen Straßenkarten in Kombination mit der globalen Positionsbestimmung über beispielsweise GPS sowie eine Sensor-basierte Wahrnehmung der Fahrstreifen über beispielsweise die Kamera 14. Für ein einheitliches und in sich kongruentes Bild der Umgebung wird unter Berücksichtigung aller Datenquellen und deren Fehler die wahrscheinlichste Pose, also Position und Ausrichtung des Fahrzeugs 10, relativ zu Informationen aus der Karte und der wahrscheinlichste Fahrstreifen bestimmt. Dazu wird in der Anordnungsvorrichtung 11 das in Fig. 2 im Detail beschriebene Verfahren durchgeführt.

Als Eingangsdaten verwendet die Anordnungsbestimmungsvorrichtung 11 eine globale Positionsmessung, eine fahrstreifengenaue digitale Straßenkarte sowie ein sogenanntes Wahrnehmungsverfahren, welches Fahrstreifenhypothesen aus Sensordaten, insbesondere der Kamera 14, erzeugt.

Die globale Positionsmessung kann beispielsweise über ein globales Positionsbestimmungssystem wie zum Beispiel GPS oder Galileo, durchgeführt werden. Das Messverfahren bestimmt eine zweidimensionale Position, beispielsweise in einem globalen Referenzsystem der Geodäsie, beispielsweise dem World Geodetic System, abgekürzt WGS. Alternativ kann die zweidimensionale Position in einem beliebigen anderen stationären, also nicht fahrzeugbezogenen, Bezugssystem bestimmt werden. Dem Messverfahren der globalen Positionsmessung wird oder ist eine Messvarianz zugeordnet. Mithilfe der globalen Positionsmessung wird ferner eine globale Ausrichtung des Fahrzeugs inklusive einer entsprechenden Messvarianz bestimmt, beispielsweise mithilfe eines Kompasses. Die zweidimensionale Position in Verbindung mit der Ausrichtung des Fahrzeugs wird nachfolgend als Anordnungsinformation für das Fahrzeug oder Pose des Fahrzeugs bezeichnet werden.

Die fahrstreifengenaue digitale Straßenkarte stellt Informationen für einzelne Fahrstreifen bereit. Die Fahrstreifen sind als Liste von Punkten definiert, die jeweils eine Position inklusive der Modellierungsvarianz besitzen. Die Punkteliste repräsentiert dabei die Fahrstreifenmitte und alle Punkte auf den Verbindungslinien werden jeweils als lineare Interpolation der benachbarten modellierten Punkte interpretiert. Ferner ist eine Erweiterung mit zusätzlichen Merkmalen möglich, wie zum Beispiel den Fahrbahnmarkierungstypen am rechten und linken Fahrstreifenrand oder Positionen von Stopplinien und Verkehrsschildern.

Das Wahrnehmungsverfahren erzeugt Fahrstreifenhypothesen aus Sensordaten von Sensoren des Fahrzeugs. Die verwendeten Sensoren und Verfahren zur Bestimmung der Fahrstreifenhypothesen sind dabei unerheblich. Insbesondere können jedoch beispielsweise Kameras an dem Fahrzeug verwendet werden und die Fahrstreifenhypothesen auf der Grundlage einer digitalen Bildverarbeitung ermittelt werden. Als Ergebnis des Verfahrens liegen die Fahrstreifenhypothesen als Punktlisten vor, welche jeweils die Fahrstreifenmitten repräsentieren. Da das Wahrnehmungsverfahren mithilfe von Fahrzeugsensoren durchgeführt wird, befinden sich die Punkte der Punktlisten in einem auf das Fahrzeug ausgerichteten Koordinatensystem, einem sogenannten lokalen Bezugssystem als sogenannte "ego-lokale Koordinaten". Die Koordinaten der Punkte weisen ebenfalls eine Messvarianz auf. Als Erweiterung können wiederum die gleichen Zusatzmerkmale wie in der Karte aus den Sensordaten extrahiert werden, wie zum Beispiel die Fahrbahnmarkierungstypen, Stopplinien und Verkehrsschilderpositionen.

Weiterhin werden als Eingangsdaten für die Bestimmung der Anordnungsinformation Odometriedaten des Fahrzeugs verwendet, welche die Eigenbewegung des Fahrzeugs kontinuierlich oder zwischen bestimmten Zeitpunkten, sogenannten Zeitschritten, beschreiben.

Das in Fig. 2 gezeigte Verfahren 20 umfasst Verfahrensschritte 21 bis 28. Im Schritt 21 findet eine Initialisierung statt. Dabei werden beispielsweise Posenhypothesen an einer aktuellen GPS-Position bestimmt, Kartenmaterial geladen und eine aktuelle Fahrstreifenhypothese aus dem Kartenmaterial für die aktuelle GPS-Position bestimmt. Die nachfolgenden Schritte 22 bis 28 werden zyklisch durchlaufen, wobei ein Zyklus beispielsweise einige Millisekunden, beispielsweise 3 bis 40 ms, dauert. Die Zyklusdauer kann beispielsweise einer Dauer entsprechen, die für eine Erfassung von Sensordaten von beispielsweise der Kamera 14, den Radsensoren 18 und der globalen Positionsbestimmung benötigt wird.

Da bei dem Verfahren 20 Messfehler und Ungenauigkeiten der Karteninformation sowie der wahrgenommenen Umgebung berücksichtigt werden sollen, werden die Posen- und Fahrstreifenhypothesen als mehrdimensionale Normalverteilungen dargestellt (Gaußsche Mischverteilung). Ebenso werden Informationen zum Aktualisieren der Posen- und Fahrstreifenhypothesen, beispielsweise Ergebnisse der globalen Positionsmessung, des Wahrnehmungsverfahrens und der Odometriedaten sowie Informationen der digitalen Straßenkarte, als entsprechende mehrdimensionale Normalverteilungen dargestellt. Aktualisierungen können dann beispielsweise als Multiplikation aller Komponenten dieser Verteilungen realisiert werden. Auf diese Art und Weise wird im Schritt 22 die Posenhypothese aus dem letzten Zeitschritt oder aus der Initialisierung mittels der Odometriedaten aktualisiert und somit in den aktuellen Verarbeitungszeitpunkt überführt. Im Schritt 23 wird die Posenhypothese mithilfe der globalen Positionsmessung aktualisiert. Im Schritt 24 wird mithilfe des oben beschriebenen Wahrnehmungsverfahrens die lokale Fahrstreifenanordnung erfasst und im Schritt 25 werden diese lokal erfassten Fahrstreifen in das globale oder stationäre Koordinatensystem mithilfe der aktuellen Posenhypothese überführt. Somit steht eine erste Fahrstreifenanordnung bereit, welche auf der Grundlage der lokal erfassten Fahrstreifen gebildet wurde. Für die aktuelle Posenhypothese des Fahrzeugs 10 wird aus dem Kartenmaterial eine zweite Fahrstreifenanordnung ermittelt. Die Sensor-basierten Fahrstreifen aus der ersten Fahrstreifenanordnung werden nun mit den Karten-basierten Fahrstreifen aus der zweiten Fahrstreifenanordnung jeweils paarweise verglichen (Schritt 26). Dazu wird eine geometrische Ähnlichkeit eines jeweiligen Fahrstreifenpaars bestimmt, auch für systematische Verschiebungen der Fahrstreifen zueinander. Der Ähnlichkeitswert kann durch den Vergleich der zusätzlichen Informationen, wie zum Beispiel der Fahrstreifenmarkierungstypen oder Stopplinien- und Verkehrsschilderpositionen, angereichert und verbessert werden. Unter der Annahme, dass das jeweilige Fahrstreifenpaar ein- und denselben tatsächlichen Fahrstreifen repräsentiert, wird eine jeweilige gewichtete Posen-Aktualisierung erstellt. Die Pose ergibt sich aus den verschiedenen Verschiebungen zueinander und das Gewicht ergibt sich durch die Ähnlichkeiten der Fahrstreifen zueinander. Im Schritt 27 wird die aktuelle Posenhypothese mithilfe aller so gewonnenen Posen-Aktualisierungen aktualisiert. Das Ergebnis ist eine neue Posenhypothese, welche im nächsten Zyklus des Verfahrens verwendet werden kann. Zusätzlich kann die Posenhypothese an das Fahrerassistenzsystem 12 ausgegeben werden. Im Schritt 28 wird die Fahrstreifenhypothese der Initialisierung oder des letzten Zyklus des Verfahrens mithilfe der in das globale Koordinatensystem überführten Sensor-basierten Fahrstreifen aktualisiert und zusätzlich fließen die Ergebnisse des Vergleichs der Fahrstreifendaten aus dem Schritt 26 in die Aktualisierung der Fahrstreifenhypothese ein. Die aktualisierte Fahrstreifenhypothese kann ebenfalls an das Fahrerassistenzsystem 12 ausgegeben werden, so dass das Fahrerassistenzsystem 12 auf der Grundlage der Posenhypothese und der Fahrstreifenhypothese eine Steuerung des Fahrzeugs 10 insbesondere im Nahbereich durchführen kann. Die Fahrstreifenhypothese kann aus Kartendaten bis zum gewünschten Wahrnehmungshorizont erweitert werden und dem Fahrerassistenzsystem 12 zur Verfügung gestellt werden.

Bei dem Verfahren 20 werden die Posenbestimmung und die Aktualisierung von Sensor-basierten Fahrstreifendaten mit Kartendaten parallel durchgeführt und damit gemeinsam optimiert. Das Verfahren arbeitet mit einer beliebigen Anzahl an Fahrstreifen und ist damit in der Lage, auch komplexe Szenarien wie Kreuzungen und Abfahrten abzudecken. Alle Sensor-basierten Eingangsdaten können auf kostengünstigen Sensoren beruhen, da die jeweiligen Unsicherheiten mit den Normalverteilungen in die Berechnung einbezogen werden können. Ebenso können verhältnismäßig einfache Kartendaten verwendet werden, so dass beispielsweise keine georeferenzierten Sensormerkmale direkt in der Karte verfügbar sein müssen. Die Normalverteilungsbasierte Darstellung erlaubt eine Berechnung des gesamten Zyklus innerhalb weniger Millisekunden auf einem üblichen Mikroprozessor oder auf einer üblichen Recheneinheit in einem Fahrzeug und kann daher echtzeitfähig für die Berechnung im Fahrzeug verwendet werden.

Eine Ausführungsform des zuvor beschriebenen Verfahrens, welche einen Faktorgraph-basieren Ansatz verwendet, wird nachfolgend im Detail beschrieben werden.

Bei dem Verfahren wird eine grobe Lokalisierung des Fahrzeugs unter Verwendung von kostengünstigen Sensoren, beispielsweise GPS-Sensoren und einer Kamera-basierten Fahrspurerkennung, und Karten mit einer Genauigkeit auf Fahrstreifenebene durchgeführt, wobei das wahrgenommene Straßennetz und die Positionsbestimmung gleichzeitig aktualisiert werden. Dabei wird ein an einen Faktorgraph angepasster Summenproduktalgorithmus angewendet, welcher die Abhängigkeiten zwischen beobachteten und verdeckten Variablen modelliert. Der Summenproduktalgorithmus wird auch als "Belief Propagation" oder "Sum-Product Message Passing" bezeichnet. Die "Belief Propagation" kann in Verbindung mit azyklischen Graphen oder allgemeinen Graphen verwendet werden. Wenn die Graphen Zyklen oder Schleifen ("loops") enthalten, wird der Algorithmus auch als "Loopy Belief Propagation" bezeichnet. Die "Belief Propagation" gehört zu den sogenannten "Message Passing"-Algorithmen, welche auf Faktorgraphen angewendet werden können. Das "Message Passing" (zu Deutsch in etwa "Informationsweiterleitung") innerhalb des Graphen beruht auf multimodalen Normalverteilungen für eine Variablendarstellung und quadratische Rauschmodelle, was zu einer schnellen und genau festgelegten Berechnungsstruktur führt. Simulationen zeigen, dass die Positionsbestimmungsgenauigkeit unempfindlich gegenüber den meisten Arten von Messrauschen ist, außer einem konstanten Versatz von globalen Posenmessungen, welcher jedoch dennoch um einen Faktor 8 reduziert werden kann. Tests in echten Umgebungen mit einem durchschnittlichen Positionsbestimmungsfehler von 1,71 m in einem städtischen Szenario beweisen die Anwendbarkeit des Ansatzes für automatische Fahraufgaben sowie seine Echtzeitfähigkeit mit einer durchschnittlichen Ausführungszeit von 3 ms auf einer typischen Rechenanlage.

Der Trend beim Fahrerassistenzsystem (englisch: "Driver Assistance Systems", DAS) geht in Richtung eines gestützten oder sogar geführten automatischen Fahrens. Derartige Aufgaben benötigen ein zuverlässiges Verständnis einer aktuellen Umgebung, insbesondere die Erkennung von befahrbaren Bereichen sowie die geometrische und topologische Struktur der Straße und des Fahrstreifennetzes darin.

Menschen verwenden bei derartigen Fahraufgaben ihre visuelle Wahrnehmung und Vorwissen über typische Situationen in Kombination mit zusätzlichen Informationsquellen, wie zum Beispiel Straßenkarten, um das Verständnis für eine Szene zu verbessern. Automatische Systeme verwenden die gleichen Prinzipien, indem sie Sensoreingaben von zum Beispiel Kameras oder Entfernungssensoren sowie statische Quellen, wie zum Beispiel Landkarten, in Verbindung mit globalen Positionsbestimmungssystemen verwenden. Diese Systeme leiden jedoch unter verrauschten und fehlerhaften Eingabedaten. Eine Fahrstreifenerkennung auf der Grundlage einer Sensoreingabe kann durch geometrisches Rauschen gestört werden, übersieht Fahrspuren insgesamt oder erkennt nicht existente Fahrspuren, d.h. ist von falschen Ergebnissen überzeugt, was zu einer topologischen Unklarheit führt, welche sich zumindest linear mit der Entfernung vergrößert. Straßenkartendaten können eine topologische Struktur mit einer Genauigkeit auf Fahrstreifenebene und unendlicher Reichweite bereitstellen. Ihre Herstellung kann jedoch geometrische Ungenauigkeiten und sogar weitere topologische Fehler aufweisen, beispielsweise durch Änderungen an dem tatsächlichen Straßennetz. Zusätzlich hängt das benötigte globale Positionsbestimmungssystem üblicherweise von externen Eingaben ab, zum Beispiel von Satelliten. Daher ist es nur bis zu einem gewissen Grad genau.

Bei der nachfolgend beschriebenen Ausführungsform werden daher verrauschte Fahrstreifenhypothesen von Sensoreingaben, verrauschte Straßenkarten mit einer Genauigkeit auf Fahrstreifenebene und verrauschte globale Positionsbestimmungsinformationen verwendet, um gleichzeitig die Genauigkeit von allen dreien zu verbessern. Dies wird erreicht, indem alle Messwerte und Zuordnungen zwischen Sensordaten und Straßenkartendaten als Randbedingungen in einem speziell ausgestalteten Faktorgraph gesammelt werden, dessen optimale Parameter durch Anwenden einer Loopy Belief Propagation herausgefunden werden.

Nachfolgend wird zunächst ein theoretischer Hintergrund von Faktorgraphen und der Loopy Belief Propagation gegeben, soweit er für ein umfassendes Verständnis der danach beschriebenen Ausführungsform erforderlich ist.

Faktorgraphen sind graphische Darstellungen, welche für Gruppen von Wahrscheinlichkeitsvariablen und ihre bedingten Abhängigkeiten verwendet werden. Ein Faktorgraph zerlegt eine verbundene Wahrscheinlichkeitsverteilung $P$ $(x_1, x_2, \cdots, x_n)$ in Faktoren $\psi_i$ nur in Abhängigkeit von einer Teilgruppe von Zufallsvariablen, wie es in Gleichung (1) dargestellt ist, wobei Z eine normalisierende Konstante ist.

$$P(x_1, x_2, \cdots, x_n) = \frac{1}{Z} \prod_i \psi_i(x_{\psi_i^1}, x_{\psi_i^2}, \cdots, x_{\psi_i^m}) \qquad (1)$$

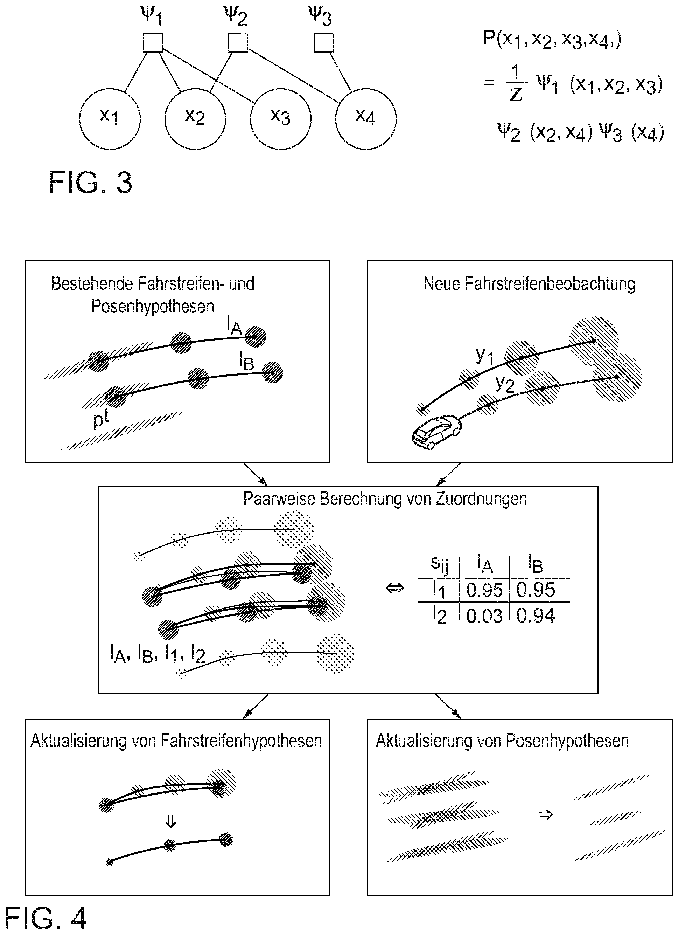

Faktorgraphen werden üblicherweise als unidirektionale Graphen mit kreisförmigen Knoten als Variablen und rechteckigen Knoten als Faktoren dargestellt, welche durch Kanten für jede in dem Faktor verwendete Variable verbunden sind, wie es in Fig. 3 gezeigt ist.

Eine übliche Aufgabe ist es, die Randverteilung von verdeckten, sogenannten "hidden" Variablen $X_h$ unter Berücksichtigung der gegebenen Werte von bekannten beobachteten Variablen $X_o$ zu bestimmen. Der Faktorgraph kann dahingehend verringert werden, dass er die bedingte Wahrscheinlichkeit $P(X_h \mid X_o)$ darstellt, indem alle beobachteten Variablen von dem Graph entfernt werden und alle Vorkommnisse der Variable in den Faktoren auf den beobachteten Wert gesetzt werden. Diese Beobachtungen können mit einem Informationsweiterleitungsalgorithmus, einem sogenannten "Message Passing"-Algorithmus, zum Beispiel dem Summenproduktalgorithmus, unter Verwendung der Abhängigkeiten der Faktoren verteilt werden, indem rekursiv Informationen, sogenannte Nachrichten oder "Messages", $m_{i \to j}$ gemäß Gleichung (2) gesendet werden.

$$m_{i \to j} = \int_{x \in \mathbf{S_i} \backslash \mathbf{S_j}} \psi_i(x) \prod_{k \in \mathbf{N_i} \backslash \{j\}} m_{k \to i} \, \mathrm{d}x \qquad (2)$$

Eine ausgehende Nachricht von Knoten $i$ nach Knoten $j$ ist das Produkt von allen eingehenden Nachrichten von allen Nachbarn $\mathbf{N_i}$ außer von $j$-mal dem zugeordneten Faktor, welcher auf die Teilmenge der von dem Knoten $j$ verwendeten Variablen $S_j$ marginalisiert ist. Für Variablenknoten kann $\psi_i$ als 1 angenommen werden. Die endültige Randverteilung einer Variablen ist das Produkt von allen eingehenden Nachrichten.

Da eingehende Nachrichten zuvor bekannt sein müssen, muss die Nachrichtenverarbeitung zeitlich abgestimmt sein, um diese Vorbedingung zu erfüllen. Baumähnliche Faktorgraphen garantieren einen derartigen zeitlichen Ablauf, welcher die global richtige Lösung findet. Zyklische Graphen weisen jedoch keine gültige zeitliche Planung auf, da alle Nachrichten in einem Zyklus eine Eingabe von einer andere Nachricht in dem Zyklus benötigen. Nichtsdestotrotz haben empirische Studien gezeigt, dass der Summenproduktalgorithmus lokal optimale Lösungen finden kann, wenn alle Aktualisierungen bis zur Konvergenz wiederholt werden. In diesem Fall können Nachrichten mit einer einheitlichen Verteilung initialisiert werden. Der resultierende Algorithmus wird dann "Loopy Belief Propagation" genannt.

Bei der nachfolgend beschriebenen Ausführungsform wird ein Faktorgraph für eine gleichzeitige Lokalisierungs- und Abbildungstechnik ("Simultaneous Localisation and Mapping", SLAM) verwendet, um Fahrspuren eines Straßennetzes ganz allgemein für beliebige Kurven und die Anordnung des Fahrzeugs darin zu bestimmen. Um dies zu erreichen, sind folgende zwei Aufgaben zu berücksichtigen. Erstens, das Problem der Darstellung der derzeitigen Wahrscheinlichkeitsverteilung über die bestehenden Merkmale (d.h. Posen und Fahrstreifen) mit Verfahren, um neue Messungen in diese Wahrscheinlichkeiten einzuarbeiten. Und zweitens, das Zuordnungsproblem zwischen Messungen von identischen Objekten in der realen Welt, d.h. zu unterschiedlichen Zeiten beobachtete Fahrspuren und Fahrspuren aus einer Straßenkarte. Das Zuordnungsproblem und Messwertaktualisierungen von Variablen werden häufig getrennt gelöst. Sie können jedoch gleichzeitig gelöst werden, indem mehrere mögliche Zuordnungen auf einmal berücksichtigt werden. Das allgemeine Prinzip ist in Fig. 4 dargestellt, worin eine aktuelle Pose und aktuelle Fahrstreifenhypothesen mit neuen Fahrstreifenbeobachtungen kombiniert werden, indem geeignete Zuordnungen bestimmt werden und sowohl die Fahrspurgeometrie als auch die Pose auf der Grundlage dieser zugeordneten Fahrspuren aktualisiert werden. Zusätzlich werden globale Posenmessungen, welche von globalen Positionsbestimmungssystemen bereitgestellt werden, und Odometriemessungen, welche von fahrzeugeigenen Messeinheiten bereitgestellt werden, berücksichtigt.

Fig. 4 zeigt schematisch den Aktualisierungszyklus. Bestehende multimodale Posenhypothesen und Fahrstreifenhypothesen werden mit neuen Fahrstreifenbeobachtungen kombiniert, indem ähnliche Fahrstreifen gesucht werden und diese Zuordnungen verwendet werden, um die Fahrstreifen und Posen zu aktualisieren.

Beide Probleme werden als ein einziger Faktorgraph modelliert, welcher alle zusätzlichen Eingangsquellen unter Verwendung der in Tabelle 1 definierten Variablen einbezieht.

| Symbol | Beschreibung | Menge | |
|--------|-------------|-------|---|
| $q^t$ | Globale Posenmessung zur Zeit $t$ | P | 0 |
| $o^t$ | Odometriemessung von $t$-1 bis $t$ | P | 0 |
| $y_j$ | $i$-ter aus Sensordaten beobachteter Fahrstreifen in Ego-Lokalkoordinaten | C | o |
| $m_j$ | $j$-ter Fahrstreifen aus dem Kartenmaterial in globalen Koordinaten | C | o |

(fortgesetzt)

| Symbol | Beschreibung | Menge | |
|---|---|---|---|
| $p^t$ | Tatsächliche globale Pose zur Zeit $t$ | P | h |
| $l_j$ | Tatsächlicher Fahrstreifen, welcher dem $i$-ten aus Sensordaten beobachteten Fahrstreifen oder dem Fahrstreifen aus dem Kartenmaterial in globalen Koordinaten entspricht | C | h |
| $s_{ij}$ | Gradmesser, ob $l_i$ und $l_j$ die gleichen sind | {0, 1} | h |

Alle posenbezogenen Variablen sind in der Menge $P = R^2 \cap R_{[-\pi,\pi]}$ einer 2D-Position mit einer Orientierung oder Ausrichtung definiert. Alle kurvenbezogenen Variablen sind als Farbstreifenmittellinien in C definiert, wobei der Umfang aller Funktionen einen Bereichsparameter $z \in [z_1,z_2]$ auf eine Pose in P unter Verwendung einer natürlichen Parametrisierung abbildet, d.h. die Bogenlänge der Kurve $\gamma$ zwischen $\gamma(z_i)$ und $\gamma(z_j)$ beträgt $|z_i\text{-}z_j|$. Die Variablen in der Tabelle sind als überwacht (o) oder verdeckt (h) markiert. Es ist zu beachten, dass die Anzahl der Variablen in dem Faktorgraph im Voraus bekannt sein muss. Daher wird eine eigene Variable für die entsprechenden tatsächlichen Fahrstreifen, welche der jeweiligen Fahrstreifenbeobachtung entsprechen, verwendet, da ihre gesamte Anzahl vorab bestimmt oder ausreichend groß gewählt werden kann. Die wirkliche Anzahl von tatsächlichen Fahrstreifen ist unbekannt und kann nur implizit von den Hinweisvariablen für jedes Paar von Fahrstreifen abgeleitet werden.

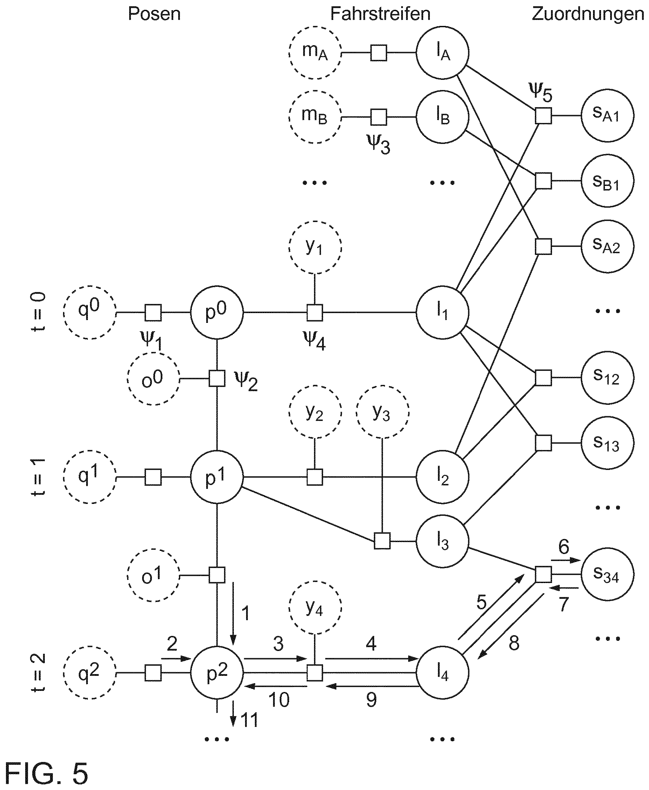

Fig. 5 zeigt einen entsprechenden Faktorgraph. In dem Faktorgraph werden diese Variablen mit Faktoren verbunden, welche notwendige Vorbedingungen und angenommene bedingte Abhängigkeiten beschreiben. Der linke Teil des Graphen löst die Posenverfolgung und ist in der Faktorgraphdarstellung ein Markov-Prozess. Der mittlere Teil stellt die Aktualisierung der Fahrstreifen, zum Beispiel Kurven, sicher, während der rechte Teil das Zuordnungsproblem umfasst. Der Graph dehnt sich auf die gesamte Anzahl von Zeitschritten und Fahrstreifenbeobachtungen entsprechend aus. Insgesamt gibt es fünf unterschiedliche Arten von Faktoren, welche eine Art von Beobachtungsfehler modellieren:

1) Faktor $\psi_1$ (siehe Gleichung (3)) verbindet die aktuelle Pose $p^t$ mit der beobachteten Pose $q^t$ unter der Annahme eines normalverteilten Messrauschens mit einer Kovarianz $\Sigma_{q^t}$, wobei $N_{[\mu,\Sigma]}(x)$ der Wert einer multidimensionalen Normalverteilungsfunktion am Punkt x mit dem Mittelwert $\mu$ und der Kovarianzmatrix $\Sigma$ ist.

$$\psi_1(p^t, q^t) = N_{[q^t, \Sigma_{q^t}]}(p^t) \qquad (3)$$

2) Der Faktor $\psi_2$ (siehe Gleichung (4)) verbindet die aktuellen Posen von zwei aufeinanderfolgenden Zeitschritten mit einer Odometriemessung $o^t$, wobei wiederum ein normalverteiltes Messrauschen mit einer Kovarianz $\Sigma_{o^t}$ angenommen wird.

$$\psi_2(p^t, p^{t+1}, o^t) = N_{[o^t, \Sigma_{o^t}]}(p^t - p^{t-1}) \qquad (4)$$

3) Der Faktor $\psi_3$ (siehe Gleichung (5)) verbindet eine Fahrspur von dem Kartenmaterial $m_i$ mit der tatsächlichen Fahrspur $l_i$, welche dieser Kartenfahrspur entspricht, wobei normalverteilte Modellierungsungenauigkeiten mit einer Kovarianz $\Sigma_m$ für alle Punkte des Kartenmaterials angenommen werden. Es wird angenommen, dass die Kurven den gleichen Parameter z verwenden, wodurch eine einheitliche Abbildung zwischen Kurvenpunkten erzeugt wird. Der Faktor wird durch die Länge $\|Z\|$ des verbundenen Bereichs $Z = def_{m_i \wedge l_i}$ normalisiert, um vergleichbare Werte zu erhalten. Faktoren von Kurven ohne einen Verbindungsbereich werden auf null gesetzt.

$$\psi_3(l_i, m_i) = \frac{1}{\|Z\|} \int_{z \in Z} N_{[m_i(z), \Sigma_m]}(l_i(z)) \, dz \qquad (5)$$

4) Der Faktor $\psi_4$ (siehe Gleichung (6)) verbindet eine Fahrspurbeobachtung von Sensordaten $y_i$ mit der tatsächlichen Fahrspur $l_i$, welche dieser Beobachtung und der aktuellen Pose zum Zeitpunkt der Beobachtung entspricht. Wiederum wird die Differenz zwischen der Messung und der tatsächlichen Fahrspur mit einem normalverteilten Beobachtungsrauschen $\Sigma_{y_i(z)}$ modelliert, welches individuell für jeden Punkt der beobachteten (mit $0z$ parametrisierten) Kurve gegeben ist. Entsprechend wird der Faktor mit der Länge $\|Z\|$ des verbundenen Bereichs $Z = def_{y_i \wedge l_i}$ normalisiert.

$$\psi_4(l_i, y_i, p^t) = \frac{1}{\|Z\|} \int_{z \in Z} \mathsf{N}_{[y_i(z), \Sigma_{y_i(z)}]}(l_i(z) - p^t)\, \mathrm{d}z \qquad (6)$$

5) Der Faktor $\psi_5$ (siehe Gleichung (7)) verbindet Paare von tatsächlichen Fahrstreifen ($l_i, l_j$) mit ihren binären Anzeigevariablen $s_{ij}$. Der kleine konstante Wert $\alpha$ regelt den Ähnlichkeitsschwellenwert, mit welchem zwei Fahrstreifen als gleich oder ungleich markiert werden ($0 < \alpha < 1$). Die Anzeigefunktion I(*cond.*) nimmt den Wert 1 an, wenn die Bedingung wahr ist, und sonst den Wert 0. Wiederum ist $\|Z\|$ die Länge des verbundenen Bereichs $Z = def_{l_i \wedge l_j}$.

$$\psi_5(l_i, l_j, s_{ij}) = \quad \mathsf{I}(s_{ij} = 0)\,\alpha +$$
$$\mathsf{I}(s_{ij} = 1)\frac{1}{\|Z\|}\int_{c \in Z}\mathsf{I}(l_i(z) = l_j(z))\mathrm{d}z \qquad (7)$$

Da der vorgeschlagene Faktorgraph Zyklen enthält, ist ein Zeitplan für die Nachrichtenweiterleitung notwendig, um den "Loopy Belief Propagation"-Algorithmus laufen zu lassen. Da der Graph zeitabhängige Variablen enthält, welche im Betrieb bei Echtzeitberechnungen eingefügt werden, können Informationen nur in die Zukunft und nie zurück in die Vergangenheit geleitet werden, um eine konstante Laufzeit des Nachrichtenweiterleitungszyklus sicherzustellen. Die zeitunabhängigen Variablen können jedoch zu jedem Zeitschritt mit neuen Informationen aktualisiert werden. Daher werden ihre Nachrichten zu jeder Zeit einmal neu berechnet. Obwohl mehrere Nachrichtenweiterleitungszyklen pro Zeitschritt zu einer schnelleren Konvergenz führen können, ist es vorzuziehen, dies nur einmal durchzuführen, da eine langsame Konvergenz das Finden einer global optimalen Lösung verbessert. Unter Berücksichtigung der erwähnten Richtlinien wird der zeitliche Ablauf verwendet, welcher durch die Pfeile und ihre Nummerierungen in der Fig. 5 gezeigt ist, um den "Loopy Belief Propagation"-Algorithmus auszuführen, welcher letztendlich zu einem lokalen Optimum der gemeinsamen Wahrscheinlichkeit von allen verdeckten Variablen konvergiert.

Das Anwenden des Verfahrens auf Probleme in der echten Welt benötigt eine geeignete Darstellung von allen Variablen und Verfahren, um die Nachrichten des Faktorgraphen unter Verwendung dieser Variablen zu berechnen. Drei unterschiedliche Arten von Verteilungen der Variablen müssen dargestellt werden: Posen in der Menge P, Kurven oder Fahrstreifen in der Menge C und die binären Anzeigevariablen.

a) Posenvariablen und Nachrichten: Posenverteilungen von *p* werden als eine gewichtete Mischung von Normalverteilungen mit einer mittleren Pose $\mu_i$ und einer Kovarianzmatrix $\Sigma_i$ für die Position und den Winkel angenähert, was die Form $\sum_i w_i \mathsf{N}_{[\mu_i, \Sigma_i]}(p)$ ergibt. Da angenommen werden kann, dass alle Winkelvarianzen verhältnismäßig klein sind, werden die Berechnungen vereinfacht, indem die einhüllenden Winkelverteilungen mit einer einfachen Normalverteilung angenähert werden.

Die allgemeine Nachrichtenberechnung (siehe Gleichung (2)) benötigt eine Multiplikation und Marginalisation dieser Verteilungen. Unter Verwendung der Eigenschaft aller Normalverteilungen, dass $\int c \mathsf{N}_{[\mu, \Sigma]}(x)\mathrm{d}x = c$ gilt, kann die Marginalisierung einfach erreicht werden und das Produkt von zwei Posenverteilungen kann unter Verwendung der Gleichung (8) berechnet werden.

$$\sum_i w_i \mathsf{N}_{[\mu_i, \Sigma_i]}(p)\sum_j w_j \mathsf{N}_{[\mu_j, \Sigma_j]}(p) = \sum_k w_k \mathsf{N}_{[\mu_k, \Sigma_k]}(p)$$
$$\text{mit} \quad \Sigma_k^{-1} = \Sigma_i^{-1} + \Sigma_j^{-1};\ \mu_k = \Sigma_k(\Sigma_i^{-1}\mu_i + \Sigma_j^{-1}\mu_j) \qquad (8)$$
$$w_k = w_i w_j \mathsf{N}_{[\mu_j, \Sigma_i + \Sigma_j]}(\mu_i)$$

Um eine ansteigende Anzahl von Mischkomponenten zu vermeiden, können ähnliche Komponenten durch eine einzelne Verteilung unter Verwendung der Gleichung (9) angenähert werden.

$$w_i \mathsf{N}_{[\mu_i, \Sigma_i]}(p) + w_j \mathsf{N}_{[\mu_j, \Sigma_j]}(p) \approx w_k \mathsf{N}_{[\mu_k, \Sigma_k]}(p)$$
$$\text{mit} \quad w_k = w_i + w_j;\ \mu_k = \frac{1}{w_k}(w_i \mu_i + w_j \mu_j) \qquad (9)$$
$$\Sigma_k = \frac{1}{w_k}(w_i \Sigma_i + w_j \Sigma_j + w_1 w_2 (\mu_i - \mu_j)(\mu_i - \mu_j)^T)$$

b) Kurvenvariablen und Nachrichten: Kurvenverteilungen werden als eine polygonale Kette mit Einzelposenverteilungen $\gamma(z) \in P$ für jeden Punkt $z \in Z$ dargestellt, wobei Z die Gruppe von dargestellten Punkten ist. Die Posenverteilungen dazwischen werden als lineare Interpolation der benachbarten Punkte angenommen. Somit können zusätzliche Kurvenpunkte wie benötigt eingesetzt werden und die gesamte Anzahl von Punkten pro Kurve kann durch Entfernen derjenigen Punkte verringert werden, welche bereits ähnlich zu der linearen Interpolation ihrer benachbarten Punkte sind.

Der Kurvenparameter z wird als gleich für alle Nachrichtenberechnungen, welche mehrere Kurven betreffen, betrachtet. Um diesen gemeinsamen Parameter z von zwei Kurven zu finden, wird der Versatz zwischen den ursprünglichen Parametern $z_1$ und $z_2$ dieser Kurven bestimmt, indem alle Punkten von beiden Kurven aufeinander projiziert werden und die durchschnittliche Parameterdifferenz zwischen ursprünglichen Punkten und ihrer Projektion auf die andere Kurve als Parameterversatz genommen wird. Unter Verwendung dieser Annahme können zwei weitere Vereinfachungen angewendet werden:

1) Alle Kurven betreffenden Nachrichten können getrennt für jedes in den betroffenen Kurven definierte z berechnet werden.

2) Die Integrale in den Faktoren $\psi_3$, $\psi_4$ und $\psi_5$ werden dann auf ihren Integrand reduziert, da der gemeinsame Definitionsbereich nur das einzelne z ist, für welches die Nachricht derzeit berechnet wird.

Es ist zu beachten, dass diese Vereinfachungen nicht auf die in Fig. 5 mit 10 bezeichnete Nachricht angewendet werden können, da die involvierten Kurven in unterschiedlichen Koordinatensystemem sind. Somit ist das Integral für jedes mögliche Paar von Kurvenparametern auszuwerten, was zu einer gesamten Gruppe von gewichteten Posenverteilungen führt.

c) Binäre Anzeigen: Diese werden mit einem Wahrscheinlichkeitswert in dem Bereich [0,1] dargestellt, was es ermöglicht, die Anzeigefunktionen in $\psi_5$ durch die kontinuierlichen Wahrscheinlichkeiten $s_{ij}$ bzw. $1-s_{ij}$ zu ersetzen. Zusammenfassend sind die dargestellten Vorgänge ausreichend, um alle Nachrichten unter Verwendung der allgemeinen Formel der Gleichung (2) zu berechen, wobei die gewählte Darstellung der Variablen beibehalten wird. Überdies sind die Berechnungen rechentechnisch effizient. Die zwei Hauptgründe für diese Effizienz sind erstens, das alle Faktoren nur quadratisches Rauschen verwenden, so dass eine kohärente Darstellung, welche weitestgehend auf Normalverteilungen basiert, möglich ist, und zweitens, dass die erwähnten Annäherungen verwendet werden können, um die gesamte Anzahl von Mischkomponenten oder Punkten pro Fahrstreifen auf ein konstantes Minimum zu begrenzen, um eine begrenzte maximale Laufzeit pro Aktualisierungszyklus sicherzustellen.

Die zuvor beschriebene Ausführungsform des Verfahrens wurde auf zwei Arten ausgewertet: Auf simulierten Testdaten und in einem realen Szenario.

Ein Simulieren von genauen Eingaben und ein Hinzufügen von künstlichem Rauschen ermöglicht systematische Tests, welche die Empfindlichkeit auf unterschiedliche Arten von Sensorrauschen hervorbringen, was in Realtests nicht möglich wäre. Die angewendete Testumgebung erzeugt durchgängige Straßen mit zufälligen Krümmungen, zufälligen Krümmungsänderungen und zufälligen Fahrstreifenanzahlen, wobei zufällig Fahrspuren aufgeteilt oder zusammengeführt werden, sowie Kreuzungen mit zufälligen Winkeln zu der Hauptfahrtrichtung. Die aktuelle Pose wird durch Fahren entlang dieser Fahrstreifen mit zufälligen Fahrstreifenwechseln dazwischen simuliert. Das simulierte Szenario deckt die meisten Situationen ab, welche in ländlichen oder städtischen Umgebungen angetroffen werden. Unterschiedliche Arten von Rauschen wurden den Eingangsdaten, welche bei dem Verfahren verwendet wurden, hinzugefügt. Die globale Positionsmessung weist einen normalverteilten Versatz auf und die globale Winkelmessung weist einen Versatz $N_{[\mu_\alpha, \sigma_\alpha^2]}(q)$ auf. Die Fahrstreifenmessungen sind in ihrem Sichtbereich $l_y$ begrenzt und zufällige geometrische Ungenauigkeiten, zum Beispiel ein seitlicher, ein winkeliger oder ein gekrümmter Versatz, werden mit Standardabweichungen $\sigma_l$, $\sigma_a$ bzw. $\sigma_c$ hinzugefügt. Die Fahrstreifen werden zufällig mit der Wahrscheinlichkeit $y_-$ ausgeblendet oder mit der Wahrscheinlichkeit $y_+$ hinzufügt.

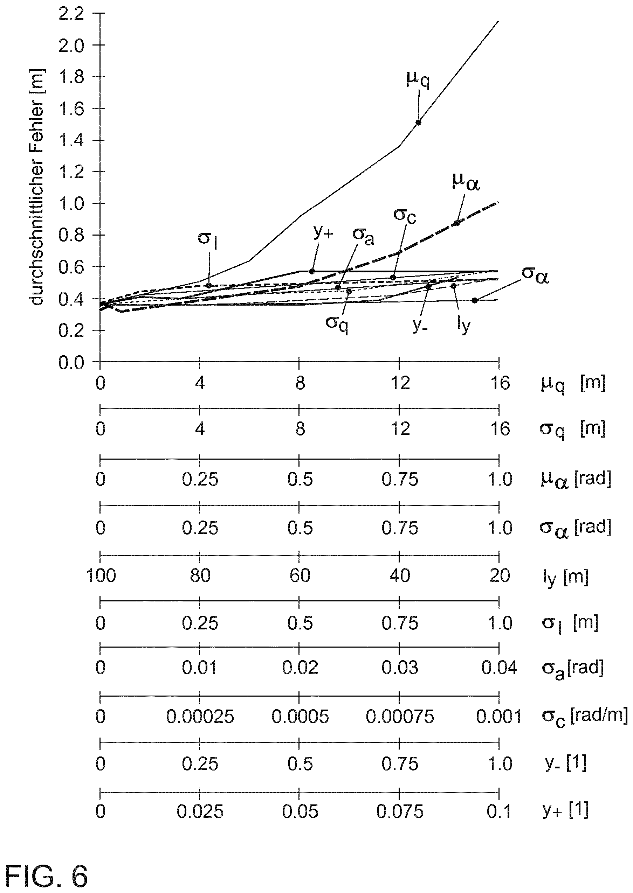

Jede Rauschquelle wird getrennt durch Simulieren von einer Fahrt von 100 km ausgewertet. Fig. 6 zeigt den mittleren Positionsbestimmungsfehler für jede Quelle und Größe des Rauschens. Die Fig. 6 zeigt deutlich, dass geometrische Ungenauigkeiten der Fahrstreifen ($l_y$, ($\sigma_l, \sigma_a, \sigma_c, y_-, y_+$) sowie weißes Rauschen bei Messungen der globalen Position und des Winkels ($\sigma_q, \sigma_\alpha$) nur geringfügige Effekte auf die Positionsbestimmungsgenauigkeit mit einem maximalen Anstieg von 0,21 m verglichen mit perfekten Daten aufweisen. Systematische Verschiebungen der Messungen der globalen Position und des Winkels haben einen größeren Effekt auf den Fehler, wobei der Algorithmus dennoch in der Lage ist, den systematischen Positionsbestimmungsfehler $\mu_q$ um einen Faktor von 8 zu verringern.

Neben dem gesamten Entfernungsfehler werden andere Auswertungskriterien betrachtet: Der seitliche Anteil des Entfernungsfehlers, der mittlere Winkelfehler und das Verhältnis der Zeit, in welcher die Zuordnung zwischen den Fahrstreifen richtig identifiziert wurde. Unabhängig von der Quelle und Größe des Rauschens (innerhalb der getesteten Bereiche, wie sie in Fig. 6 dargestellt werden) bleibt der mittlere seitliche Fehler immer unter 0,40 m, der mittlere Winkelfehler unter 0,011 rad und die Rate korrekter Zuordnung über 0,987. Diese Werte zeigen, dass die Identifikation des richtigen Fahrstreifens, der seitliche Versatz und der Winkel sehr rauschunempfindlich sind. Somit wird der Entfernungsfehler, welcher durch verrauschte Messungen eingeführt wird, hauptsächlich in einem Längsrichtungsversatz wiedergegeben.

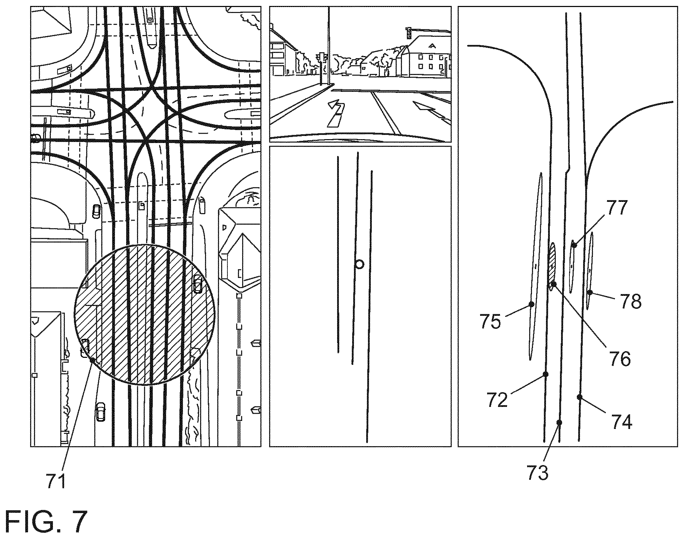

Ein realer Test wurde mit einer Straßenkarte mit einer Genauigkeit auf Fahrstreifenebene, einem Standard-GPS und einem Fahrstreifenerkennungssystem durchgeführt. Fig. 7 zeigt eine typische Szene einer Fahrt zusammen mit der Straßenkarte und der berechneten Pose. Als Referenz wurde ein hochgenaues Positionsbestimmungssystem verwendet, welches eine Abweichung von weniger als als 5 cm hat. Bei einer Fahrt einer gesamten Länge von 13,2 km in Wolfsburg, Deutschland, hatte die berechnete globale Position einen durchschnittlichen gesamten Versatz von 1,71 m, einen durchschnittlichen seitlichen Versatz von 0,39 m und einen durchschnittlichen von 0,009 rad bezogen auf das Referenzsystem. Fig. 7 zeigt links Fahrstreifen der Karte in Verbindung mit einem Satellitenbild als Visualisierungshilfe und die globale Posenmessung 71. Die Mitte zeigt ein Kamerabild und daraus erzeugte Fahrstreifenmessungen. Rechts sind berechnete verdeckte Variablen für die Fahrstreifenmitten 72, 73 und 74 und die Fahrzeugposen 75 bis 78 gezeigt, wobei die Pose mit der größten Wahrscheinlichkeit die Pose 76 ist.

**Bezugszeichenliste**

| | |
|---|---|
| 10 | Fahrzeug |
| 11 | Anordnungsbestimmungsvorrichtung |
| 12 | Fahrerassistenzsystem |
| 13 | Verbindung |
| 14 | Sensor, Kamera |
| 15 | Verarbeitungsvorrichtung |
| 16 | Antenne |
| 17 | Fahrzeugbus |
| 18 | Radsensor |
| 20 | Verfahren |
| 21-28 | Schritt |
| 71 | Globale Posenmessung |
| 72-74 | Fahrstreifenmitten |
| 75-78 | Fahrzeugposen |

**Patentansprüche**

1. Verfahren zur Bestimmung einer Anordnungsinformation für ein Fahrzeug, wobei die Anordnungsinformation eine Position des Fahrzeugs (10) und eine Ausrichtung des Fahrzeugs (10) in Bezug auf ein stationäres Koordinatensystem umfasst, wobei das Verfahren umfasst:

   - Initialisieren (21) einer Anordnungsinformation-Hypothese,

      wobei bei der Initialisierung Anordnungsinformation-Hypothesen an einer aktuellen GPS-Position bestimmt werden, Kartenmaterial geladen wird und eine aktuelle Fahrstreifenanordnungshypothese aus dem Kartenmaterial für die aktuelle GPS-Position bestimmt wird,
      wobei die nachfolgenden Schritte (22) bis (28) zyklisch durchgeführt werden,

   - Aktualisieren (22) der Anordnungsinformation für das Fahrzeug (10) in Abhängigkeit von Odometriedaten des Fahrzeugs (10),
   - Aktualisieren (23) der Anordnungsinformation für das Fahrzeug (10) in Abhängigkeit von einer globalen Positionsmessung,
   - Erfassen (24) einer lokalen Fahrstreifenanordnung in einer Umgebung des Fahrzeugs (10) mit Sensoren (14) des Fahrzeugs (10), wobei die lokale Fahrstreifenanordnung eine Anordnung von Fahrstreifen in der Umgebung des Fahrzeugs (10) in Bezug auf das Fahrzeug (10) angibt,
   - Bestimmen (25) einer ersten Fahrstreifenanordnung in Abhängigkeit von der lokalen Fahrstreifenanordnung und der aktuellen Anordnungsinformation für das Fahrzeug, wobei die erste Fahrstreifenanordnung eine Anordnung von Fahrstreifen in der Umgebung des Fahrzeugs (10) in Bezug auf das stationäre Koordinatensystem angibt, wobei ein Fahrstreifen der ersten Fahrstreifenanordnung eine die Fahrstreifenmitte darstellende Punktliste umfasst, wobei jeder Punkt der Punktliste einer mit den Sensoren des Fahrzeugs beobachteten Position entspricht,

- Bestimmen einer zweiten Fahrstreifenanordnung in Abhängigkeit von vorgegebenem Kartenmaterial und der aktuellen Anordnungsinformation für das Fahrzeug, wobei die zweite Fahrstreifenanordnung eine Anordnung von Fahrstreifen in der Umgebung des Fahrzeugs (10) in Bezug auf das stationäre Koordinatensystem angibt, wobei ein Fahrstreifen der zweiten Fahrstreifenanordnung eine die Fahrstreifenmitte darstellende Punktliste umfasst, wobei jeder Punkt der Punktliste einem jeweiligen Punkt des Kartenmaterials entspricht,

- Bestimmen (26) einer Ähnlichkeitsinformation in Abhängigkeit von einer geometrischen Ähnlichkeit der ersten Fahrstreifenanordnung und der zweiten Fahrstreifenanordnung, wobei die Ähnlichkeitsinformation auf der Grundlage von punktweisen Vergleichen von Punkten der Punktliste der ersten Fahrstreifeninformation mit entsprechenden Punkten der Punktliste der zweiten Fahrstreifeninformation bestimmt wird, und

- Aktualisieren (27) der aktuellen Anordnungsinformation für das Fahrzeug (10) in Abhängigkeit von der Ähnlichkeitsinformation,

- Aktualisieren (28) der aktuellen Fahrstreifenanordnungshypothese in Abhängigkeit von der Ähnlichkeitsinformation, wobei die Fahrstreifenanordnungshypothese eine Hypothese für eine Anordnung von Fahrstreifen in der Umgebung des Fahrzeugs (10) in Bezug auf das stationäre Koordinatensystem angibt.

2. Verfahren nach Anspruch 1, **dadurch gekennzeichnet, dass** die Anordnungsinformation des Fahrzeugs (10) Parameter einer mehrdimensionalen Normalverteilung für die Position und Ausrichtung des Fahrzeugs (10) umfasst.

3. Verfahren nach einem der vorhergehenden Ansprüche, **dadurch gekennzeichnet, dass** ein Fahrstreifen einer Fahrstreifenanordnung eine die Fahrstreifenmitte darstellende Punktliste umfasst, wobei jeder Punkt der Punktliste Parameter einer mehrdimensionalen Normalverteilung für eine Position in Bezug auf das stationäre Koordinatensystem aufweist.

4. Verfahren nach einem der vorhergehenden Ansprüche, **dadurch gekennzeichnet, dass** das Verfahren ferner umfasst:

- Erfassen einer stationären Position des Fahrzeugs (10), wobei die stationäre Position eine Position des Fahrzeugs (10) in Bezug auf das stationäre Koordinatensystem angibt, und
- Aktualisieren der zuvor bestimmten Anordnungsinformation für das Fahrzeug (10) in Abhängigkeit von der erfassten stationären Position des Fahrzeugs (10).

5. Verfahren nach einem der vorhergehenden Ansprüche, **dadurch gekennzeichnet, dass** das Verfahren wiederholt durchgeführt wird, wobei eine Wiederholungsrate für das wiederholte Durchführen des Verfahrens in einem Bereich von 25 bis 400 Wiederholungen pro Sekunde liegt.

6. Verfahren nach einem der vorhergehenden Ansprüche, **dadurch gekennzeichnet, dass** das Bestimmen der Ähnlichkeitsinformation umfasst:

- Bestimmen von Fahrstreifeninformationen für die erste Fahrstreifenanordnung mittels der Sensoren des Fahrzeugs, wobei die Fahrstreifeninformationen Fahrbahnmarkierungstypen und/oder Stopplinienpositionen und/oder Verkehrsschildpositionen umfassen, und
- Vergleichen der Fahrstreifeninformationen für die erste Fahrstreifenanordnung mit Kartenmaterial-basierten Fahrstreifeninformationen für die zweite Fahrstreifenanordnung.

7. Verfahren nach einem der vorhergehenden Ansprüche, **dadurch gekennzeichnet, dass** die erste Fahrstreifenanordnung eine Anordnung von mindestens zwei Fahrstreifen angibt und/oder die zweite Fahrstreifenanordnung eine Anordnung von mindestens zwei Fahrstreifen angibt, wobei das Bestimmen der Ähnlichkeitsinformation umfasst:

- Bestimmen mehrerer Paarähnlichkeitsinformationen, wobei jede der mehreren Paarähnlichkeitsinformationen in Abhängigkeit von einer geometrischen Ähnlichkeit eines jeweiligen Paars von zwei Fahrstreifen bestimmt wird, wobei ein jeweiliges Paar von zwei Fahrstreifen jeweils einen Fahrstreifen aus der ersten Fahrstreifenanordnung und einen Fahrstreifen aus der zweiten Fahrstreifenanordnung umfasst.

8. Verfahren nach Anspruch 7, **dadurch gekennzeichnet, dass** das Aktualisieren der zuvor bestimmten Anordnungsinformation für das Fahrzeug (10) in Abhängigkeit von der Ähnlichkeitsinformation umfasst:

- für eine jeweilige Paarähnlichkeitsinformation der mehreren Paarähnlichkeitsinformationen: Bestimmen einer jeweiligen gewichteten Aktualisierungsinformation in Abhängigkeit von der jeweiligen Paarähnlichkeitsinformation, wobei die gewichtete Aktualisierungsinformation eine Anordnungsinformation für das Fahrzeug (10) unter der Annahme umfasst, dass die Fahrstreifen des jeweiligen Paares denselben tatsächlichen Fahrstreifen betreffen und wobei das Gewicht der gewichteten Aktualisierungsinformation eine Wahrscheinlichkeit angibt, dass die Fahrstreifen des jeweiligen Paares denselben tatsächlichen Fahrstreifen betreffen, und
- Aktualisieren der zuvor bestimmten Anordnungsinformation für das Fahrzeug (10) in Abhängigkeit von den gewichteten Aktualisierungsinformationen.

9. Verfahren nach Anspruch 8, **dadurch gekennzeichnet, dass** die Anordnungsinformation des Fahrzeugs (10) und die gewichteten Aktualisierungsinformationen jeweils Parameter einer mehrdimensionalen Normalverteilung für die Position und Ausrichtung des Fahrzeugs (10) umfassen,
wobei das Aktualisieren der zuvor bestimmten Anordnungsinformation für das Fahrzeug (10) in Abhängigkeit von den gewichteten Aktualisierungsinformationen umfasst:

- Multiplizieren der Normalverteilung der Anordnungsinformation mit den Normalverteilungen der Aktualisierungsinformationen.

10. Anordnungsbestimmungsvorrichtung zur Bestimmung einer Anordnungsinformation für ein Fahrzeug, wobei die Anordnungsinformation eine Position des Fahrzeugs (10) und eine Ausrichtung des Fahrzeugs (10) in Bezug auf ein stationäres Koordinatensystem umfasst, wobei die Anordnungsbestimmungsvorrichtung umfasst:

- Sensoren zum Erfassen einer lokalen Fahrstreifenanordnung in einer Umgebung des Fahrzeugs (10), wobei die lokale Fahrstreifenanordnung eine Anordnung von Fahrstreifen in der Umgebung des Fahrzeugs (10) in Bezug auf das Fahrzeug (10) angibt, und
- eine Verarbeitungsvorrichtung (15), welche ausgestaltet ist,

eine Anordnungsinformation-Hypothese zu initialisieren, wobei bei der Initialisierung Anordnungsinformation-Hypothesen an einer aktuellen GPS-Position bestimmbar sind, Kartenmaterial ladbar ist und eine aktuelle Fahrstreifenanordnungshypothese aus dem Kartenmaterial für die aktuelle GPS-Position bestimmbar ist, und die nachfolgenden Schritte zyklisch durchzuführen,
die Anordnungsinformation für das Fahrzeug (10) in Abhängigkeit von Odometriedaten des Fahrzeugs (10) zu aktualisieren,
die Anordnungsinformation für das Fahrzeug (10) in Abhängigkeit von einer globalen Positionsmessung zu aktualisieren,
eine erste Fahrstreifenanordnung in Abhängigkeit von der lokalen Fahrstreifenanordnung und die aktuelle Anordnungsinformation für das Fahrzeug (10) zu bestimmen, wobei die erste Fahrstreifenanordnung eine Anordnung von Fahrstreifen in der Umgebung des Fahrzeugs (10) in Bezug auf das stationäre Koordinatensystem angibt, wobei ein Fahrstreifen der ersten Fahrstreifenanordnung eine die Fahrstreifenmitte darstellende Punktliste umfasst, wobei jeder Punkt der Punktliste einer mit den Sensoren des Fahrzeugs beobachteten Position entspricht,
eine zweite Fahrstreifenanordnung in Abhängigkeit von vorgegebenem Kartenmaterial und der aktuellen Anordnungsinformation für das Fahrzeug zu bestimmen, wobei die zweite Fahrstreifenanordnung eine Anordnung von Fahrstreifen in der Umgebung des Fahrzeugs (10) in Bezug auf das stationäre Koordinatensystem angibt, wobei ein Fahrstreifen der zweiten Fahrstreifenanordnung eine die Fahrstreifenmitte darstellende Punktliste umfasst, wobei jeder Punkt der Punktliste einem jeweiligen Punkt des Kartenmaterials entspricht,
eine Ähnlichkeitsinformation in Abhängigkeit von einer geometrischen Ähnlichkeit der ersten Fahrstreifenanordnung und der zweiten Fahrstreifenanordnung zu bestimmen, wobei die Ähnlichkeitsinformation auf der Grundlage von punktweisen Vergleichen von Punkten der Punktliste der ersten Fahrstreifeninformation mit entsprechenden Punkten der Punktliste der zweiten Fahrstreifeninformation bestimmt wird, und
die aktuelle Anordnungsinformation für das Fahrzeug (10) in Abhängigkeit von der Ähnlichkeitsinformation zu aktualisieren,
die aktuelle Fahrstreifenanordnungshypothese in Abhängigkeit von der Ähnlichkeitsinformation zu aktualisieren, wobei die Fahrstreifenanordnungshypothese eine Hypothese für eine Anordnung von Fahrstreifen in der Umgebung des Fahrzeugs (10) in Bezug auf das stationäre Koordinatensystem angibt.

11. Anordnungsbestimmungsvorrichtung nach Anspruch 10, **dadurch gekennzeichnet, dass** die Anordnungsbestimmungsvorrichtung (11) ausgestaltet ist, das Verfahren nach einem der Ansprüche 1-9 auszuführen.

12. Fahrzeug, umfassend:

- eine Anordnungsbestimmungsvorrichtung (11) nach Anspruch 10 oder 11, und
- ein Fahrerassistenzsystem (12), welches eine automatische Fahrfunktion für das Fahrzeug (10) bereitstellt und mit der Anordnungsbestimmungsvorrichtung (11) gekoppelt ist, wobei die automatische Fahrfunktion auf der Grundlage der aktualisierten Anordnungsinformation von der Anordnungsbestimmungsvorrichtung (11) ausgeführt wird.

13. Fahrzeug nach Anspruch 12, wobei die Anordnungsbestimmungsvorrichtung (11) ausgestaltet ist, das Verfahren nach Anspruch 1 auszuführen,
**dadurch gekennzeichnet, dass** die automatische Fahrfunktion auf der Grundlage der aktualisierten Fahrstreifenanordnungshypothese von der Anordnungsbestimmungsvorrichtung (11) ausgeführt wird.

## Claims

1. Method for determining arrangement information for a vehicle, wherein the arrangement information comprises a position of the vehicle (10) and an orientation of the vehicle (10) with respect to a stationary coordinate system, wherein the method comprises:

- initializing (21) an arrangement information hypothesis,

wherein, during initialization, arrangement information hypotheses are determined at a current GPS position, map material is loaded and a current lane arrangement hypothesis is determined from the map material for the current GPS position,
wherein the following steps (22) to (28) are carried out cyclically,

- updating (22) the arrangement information for the vehicle (10) depending on odometry data of the vehicle (10),
- updating (23) the arrangement information for the vehicle (10) depending on a global position measurement,
- detecting (24) a local lane arrangement in the surroundings of the vehicle (10) using sensors (14) of the vehicle (10), wherein the local lane arrangement indicates an arrangement of lanes in the surroundings of the vehicle (10) with respect to the vehicle (10),
- determining (25) a first lane arrangement depending on the local lane arrangement and the current arrangement information for the vehicle, wherein the first lane arrangement indicates an arrangement of lanes in the surroundings of the vehicle (10) with respect to the stationary coordinate system, wherein a lane of the first lane arrangement comprises a point list representing the lane center, wherein each point of the point list corresponds to a position observed by sensors of the vehicle,
- determining a second lane arrangement depending on predetermined map material and the current arrangement information for the vehicle, wherein the second lane arrangement indicates an arrangement of lanes in the surroundings of the vehicle (10) with respect to the stationary coordinate system, wherein a lane of the second lane arrangement comprises a point list representing the lane center, wherein each point of the point list corresponds to a relevant point of the map material,
- determining (26) similarity information depending on a geometric similarity between the first lane arrangement and the second lane arrangement, wherein the similarity information is determined on the basis of point-by-point comparisons of points of the point list of the first lane information with corresponding points of the point list of the second lane information , and
- updating (27) the current arrangement information for the vehicle (10) depending on the similarity information,
- updating (28) the current lane arrangement hypothesis depending on the similarity information, wherein the lane arrangement hypothesis indicates a hypothesis for an arrangement of lanes in the surroundings of the vehicle (10) with respect to the stationary coordinate system.

2. Method according to claim 1, **characterized in that** the arrangement information of the vehicle (10) comprises parameters of a multidimensional normal distribution for the position and orientation of the vehicle (10).

3. Method according to any of the preceding claims, **characterized in that** a lane of a lane arrangement comprises a point list representing the lane center, each point of the point list having parameters of a multidimensional normal distribution for a position with respect to the stationary coordinate system.

4. Method according to any of the preceding claims, **characterized in that** the method furthermore comprises:

- detecting a stationary position of the vehicle (10), the stationary position indicating a position of the vehicle (10) with respect to the stationary coordinate system, and
- updating the previously determined arrangement information for the vehicle (10) depending on the detected stationary position of the vehicle (10).

5. Method according to any of the preceding claims, **characterized in that** the method is performed repeatedly, a repetition rate for the repeated performance of the method being in a range of 25 to 400 repetitions per second.

6. Method according to any of the preceding claims, **characterized in that** the determination of the similarity information comprises:

- determining items of lane information for the first lane arrangement using the sensors of the vehicle, the items of lane information comprising lane marking types and/or stop line positions and/or traffic sign positions, and
- comparing the items of lane information for the first lane arrangement with items of map-material-based lane information for the second lane arrangement.

7. Method according to any of the preceding claims, **characterized in that** the first lane arrangement indicates an arrangement of at least two lanes and/or the second lane arrangement indicates an arrangement of at least two lanes, determination of the similarity information comprising:

- determining a plurality of items of pair similarity information, each of the plurality of items of pair similarity information being determined depending on a geometric similarity between a relevant pair of two lanes, a relevant pair of two lanes comprising a lane from the first lane arrangement and a lane from the second lane arrangement.

8. Method according to claim 7, **characterized in that** updating the previously determined arrangement information for the vehicle (10) depending on the similarity information comprises:

- for relevant pair similarity information of the plurality of items of pair similarity information: determining relevant weighted update information depending on the relevant pair similarity information, the weighted update information comprising arrangement information for the vehicle (10) under the assumption that the lanes of the relevant pair relate to the same actual lane and the weight of the weighted update information indicating a probability that the lanes of the relevant pair relate to the same actual lane, and
- updating the previously determined arrangement information for the vehicle (10) depending on the items of weighted update information.

9. Method according to claim 8, **characterized in that** the arrangement information of the vehicle (10) and the items of weighted update information each comprise parameters of a multidimensional normal distribution for the position and orientation of the vehicle (10), updating the previously determined arrangement information for the vehicle (10) depending on the items of weighted update information comprising:

- multiplying the normal distribution of the arrangement information by the normal distributions of the items of update information.

10. Arrangement determining device for determining arrangement information for a vehicle, wherein the arrangement information comprises a position of the vehicle (10) and an orientation of the vehicle (10) with respect to a stationary coordinate system, wherein the arrangement determining device comprises:

- sensors for detecting a local lane arrangement in the surroundings of the vehicle (10), wherein the local lane arrangement indicates an arrangement of lanes in the surroundings of the vehicle (10) with respect to the vehicle (10), and
- a processing device (15) which is designed to initialize an arrangement information hypothesis, wherein, during the initialization, arrangement information hypotheses can be determined at a current GPS position, map material can be loaded and a current lane arrangement hypothesis can be determined from the map material for the current GPS position, and to carry out the following steps cyclically,

to update the arrangement information for the vehicle (10) depending on odometry data of the vehicle (10),

to update the arrangement information for the vehicle (10) depending on a global position measurement,

to determine a first lane arrangement depending on the local lane arrangement and the current arrangement information for the vehicle (10), wherein the first lane arrangement indicates an arrangement of lanes in the surroundings of the vehicle (10) with respect to the stationary coordinate system, wherein a lane of the first lane arrangement comprises a point list representing the lane center, wherein each point of the point list corresponds to a position observed by the sensors of the vehicle,

to determine a second lane arrangement depending on predetermined map material and the current arrangement information for the vehicle, wherein the second lane arrangement indicates an arrangement of lanes in the surroundings of the vehicle (10) with respect to the stationary coordinate system, wherein a lane of the second lane arrangement comprises a point list representing the lane center, wherein each point of the point list corresponds to a relevant point of the map material,

to determine similarity information depending on a geometric similarity between the first lane arrangement and the second lane arrangement, wherein the similarity information is determined on the basis of point-by-point comparisons of points of the point list of the first lane information with corresponding points of the point list of the second lane information, and

to update the current arrangement information for the vehicle (10) depending on the similarity information,

to update the current lane arrangement hypothesis depending on the similarity information, wherein the lane arrangement hypothesis indicates a hypothesis for an arrangement of lanes in the surroundings of the vehicle (10) with respect to the stationary coordinate system.

11. Arrangement determining device according to claim 10,
**characterized in that** the arrangement determining device (11) is designed to perform the method according to any of claims 1-9.

12. Vehicle comprising:

- an arrangement determining device (11) according to either claim 10 or claim 11, and
- a driver assistance system (12) which provides an automatic driving function for the vehicle (10) and is coupled to the arrangement determining device (11), wherein the automatic driving function is carried out on the basis of the updated arrangement information from the arrangement determining device (11).

13. Vehicle according to claim 12, the arrangement determining device (11) being designed to perform the method according to claim 1,
**characterized in that** the automatic driving function is carried out on the basis of the updated lane arrangement hypothesis from the arrangement determining device (11).

**Revendications**

1. Procédé permettant la détermination d'une information de disposition pour un véhicule, dans lequel l'information de disposition comprend une position du véhicule (10) et une orientation du véhicule (10) par rapport à un système de coordonnées stationnaire, dans lequel le procédé comprend :

- l'initialisation (21) d'une hypothèse d'information de disposition,

dans lequel, lors de l'initialisation, des hypothèses d'information de disposition sont déterminées à une position GPS actuelle, un matériau cartographique est chargé et une hypothèse de disposition de voies de circulation actuelle est déterminée à partir du matériau cartographique pour la position GPS actuelle, dans lequel les étapes suivantes (22) à (28) sont effectuées de manière cyclique,

- la mise à jour (22) de l'information de disposition pour le véhicule (10) en fonction de données odométriques du véhicule (10),
- la mise à jour (23) de l'information de disposition pour le véhicule (10) en fonction d'une mesure de position globale,
- la détection (24) d'une disposition locale de voies de circulation dans un environnement du véhicule (10) avec des capteurs (14) du véhicule (10), dans lequel la disposition locale de voies de circulation indique une disposition de voies de circulation dans l'environnement du véhicule (10) par rapport au véhicule (10),
- la détermination (25) d'une première disposition de voies de circulation en fonction de la disposition locale de voies de circulation et de l'information de disposition actuelle pour le véhicule, dans lequel la première disposition de voies de circulation indique une disposition de voies de circulation dans l'environnement du véhicule (10) par rapport au système de coordonnées stationnaire, dans lequel une voie de circulation de la première disposition de voies de circulation comprend une liste de points représentant le centre de la voie de circulation, dans lequel chaque point de la liste de points correspond à une position observée avec les capteurs du véhicule,
- la détermination d'une seconde disposition de voies de circulation en fonction d'un matériau cartographique prédéterminé et de l'information de disposition actuelle pour le véhicule, dans lequel la seconde disposition de voies de circulation indique une disposition de voies de circulation dans l'environnement du véhicule (10) par rapport au système de coordonnées stationnaire, dans lequel une voie de circulation de la seconde disposition de voies de circulation comprend une liste de points représentant le centre de la voie de circulation, dans lequel chaque point de la liste de points correspond à un point respectif du matériau cartographique,
- la détermination (26) d'une information de similitude en fonction d'une similitude géométrique de la première disposition de voies de circulation et de la seconde disposition de voies de circulation, dans lequel l'information de similitude est déterminée sur la base de comparaisons point par point de points de la liste de points de la première information de voies de circulation avec des points correspondants de la liste de points de la seconde information de voies de circulation, et
- la mise à jour (27) de l'information de disposition actuelle pour le véhicule (10) en fonction de l'information de similitude,
- la mise à jour (28) de l'hypothèse actuelle de disposition de voies de circulation en fonction de l'information de similitude, dans lequel l'hypothèse de disposition de voies de circulation indique une hypothèse pour une disposition de voies de circulation dans l'environnement du véhicule (10) par rapport au système de coordonnées stationnaires.

2. Procédé selon la revendication 1, **caractérisé en ce que** l'information de disposition du véhicule (10) comprend des paramètres d'une distribution normale multidimensionnelle pour la position et l'orientation du véhicule (10).

3. Procédé selon l'une des revendications précédentes, **caractérisé en ce qu'une** voie de circulation d'une disposition de voies de circulation comprend une liste de points représentant le centre de la voie de circulation, dans lequel chaque point de la liste de points présente des paramètres d'une distribution normale multidimensionnelle pour une position par rapport au système de coordonnées stationnaire.

4. Procédé selon l'une des revendications précédentes, **caractérisé en ce que** le procédé comprend en outre :

- la détection d'une position stationnaire du véhicule (10), dans lequel la position stationnaire indique une position du véhicule (10) par rapport au système de coordonnées stationnaire, et
- la mise à jour de l'information de disposition déterminée au préalable pour le véhicule (10) en fonction de la position stationnaire détectée du véhicule (10).

5. Procédé selon l'une des revendications précédentes, **caractérisé en ce que** le procédé est effectué de manière répétée, dans lequel un taux de répétition pour la réalisation répétée du procédé se situe dans une plage de 25 à 400 répétitions par seconde.

6. Procédé selon l'une des revendications précédentes, **caractérisé en ce que** la détermination de l'information de similitude comprend :

- la détermination d'informations de voies de circulation pour la première disposition de voies de circulation à l'aide des capteurs du véhicule, dans lequel les informations de voies de circulation comprennent des types de marquage routier et/ou des positions de lignes d'arrêt et/ou des positions de panneaux de signalisation, et
- la comparaison des informations de voies de circulation pour la première disposition de voies de circulation avec des informations de voies de circulation basées sur un matériau cartographique pour la seconde disposition de voies de circulation.

7. Procédé selon l'une des revendications précédentes,

**caractérisé en ce que** la première disposition de voies de circulation indique une disposition d'au moins deux voies de circulation et/ou la seconde disposition de voies de circulation indique une disposition d'au moins deux voies de circulation, dans lequel la détermination de l'information de similitude comprend :

- la détermination de plusieurs informations de similitude de paire, dans lequel chacune des plusieurs informations de similitude de paire est déterminée en fonction d'une similitude géométrique d'une paire respective de deux voies de circulation, dans lequel une paire respective de deux voies de circulation comprend respectivement une voie de circulation provenant de la première disposition de voies de circulation et une voie de circulation provenant de la seconde disposition de voies de circulation.

8. Procédé selon la revendication 7, **caractérisé en ce que** la mise à jour de l'information de disposition déterminée au préalable pour le véhicule (10) en fonction de l'information de similitude comprend :

- pour une information de similitude de paire respective parmi le plusieurs informations de similitude de paire : la détermination d'une information de mise à jour pondérée respective en fonction de l'information de similitude de paire respective, dans lequel l'information de mise à jour pondérée comprend une information de disposition pour le véhicule (10) en supposant que les voies de circulation de la paire respective concernent la même voie de circulation réelle et dans lequel le poids de l'information de mise à jour pondérée indique une probabilité que les voies de circulation de la paire respective concernent la même voie de circulation réelle, et
- la mise à jour de l'information de disposition déterminée au préalable pour le véhicule (10) en fonction des informations de mise à jour pondérées.

9. Procédé selon la revendication 8, **caractérisé en ce que** l'information de disposition du véhicule (10) et les informations de mise à jour pondérées comprennent respectivement des paramètres d'une distribution normale multidimensionnelle pour la position et l'orientation du véhicule (10),
dans lequel la mise à jour de l'information de disposition déterminée au préalable pour le véhicule (10) en fonction de l'information de mise à jour pondérée comprend :

- la multiplication de la distribution normale des informations de disposition par les distributions normales des informations de mise à jour.

10. Dispositif de détermination de disposition permettant la détermination d'une information de disposition pour un véhicule, dans lequel l'information de disposition comprend une position du véhicule (10) et une orientation du véhicule (10) par rapport à un système de coordonnées stationnaire, dans lequel le dispositif de détermination de disposition comprend :

- des capteurs pour la détection d'une disposition locale de voies de circulation dans un environnement du véhicule (10), dans lequel la disposition locale de voies de circulation indique une disposition de voies de circulation dans l'environnement du véhicule (10) par rapport au véhicule (10), et
- un dispositif de traitement (15) qui est conçu pour initialiser une hypothèse d'information de disposition, dans lequel des hypothèses d'information de disposition peuvent être déterminées à une position GPS actuelle lors de l'initialisation, un matériau cartographique peut être chargé et une hypothèse de disposition de voies de circulation actuelle peut être déterminée à partir du matériau cartographique pour la position GPS actuelle, et pour effectuer les étapes suivantes de manière cyclique,

mise à jour de l'information de disposition pour le véhicule (10) en fonction de données odométriques du véhicule (10),
mise à jour de l'information de disposition pour le véhicule (10) en fonction d'une mesure de position globale,
détermination d'une première disposition de voies de circulation en fonction de la disposition locale de voies de circulation et de l'information de disposition actuelle pour le véhicule (10), dans lequel la première disposition de voies de circulation indique une disposition de voies de circulation dans l'environnement du véhicule (10) par rapport au système de coordonnées stationnaire, dans lequel une voie de circulation de la première disposition de voies de circulation comprend une liste de points représentant le centre de la voie de circulation, dans lequel chaque point de la liste de points correspond à une position observée avec les capteurs du véhicule,
détermination d'une seconde disposition de voies de circulation en fonction d'un matériau cartographique prédéterminé et de l'information de disposition actuelle pour le véhicule, dans lequel la seconde disposition de voies de circulation indique une disposition de voies de circulation dans l'environnement du véhicule (10) par rapport au système de coordonnées stationnaire, dans lequel une voie de circulation de la seconde disposition de voies de circulation comprend une liste de points représentant le centre de la voie de circulation, dans lequel chaque point de la liste de points correspond à un point respectif du matériau cartographique,

détermination d'une information de similitude en fonction d'une similitude géométrique de la première disposition de voies de circulation et de la seconde disposition de voies de circulation, dans lequel l'information de similitude est déterminée sur la base de comparaisons point par point de points de la liste de points de la première information de voies de circulation avec des points correspondants de la liste de points de la seconde information de voies de circulation, et

mise à jour de l'information de disposition actuelle pour le véhicule (10) en fonction de l'information de similitude,

mise à jour de l'hypothèse de disposition de voies de circulation actuelle en fonction de l'information de similitude, dans lequel l'hypothèse de disposition de voies de circulation indique une hypothèse pour une disposition de voies de circulation dans l'environnement du véhicule (10) par rapport au système de coordonnées stationnaire.

11. Dispositif de détermination de disposition selon la revendication 10, **caractérisé en ce que** le dispositif de détermination de disposition (11) est conçu pour mettre en œuvre le procédé selon l'une des revendications 1 à 9.

12. Véhicule, comprenant :

- un dispositif de détermination de disposition (11) selon la revendication 10 ou 11, et
- un système d'assistance au conducteur (12) qui fournit une fonction de conduite automatique pour le véhicule (10) et qui est couplé au dispositif de détermination de disposition (11), dans lequel la fonction de conduite automatique est mise en œuvre, sur la base de l'information de disposition mise à jour, par le dispositif de détermination de disposition (11).

13. Véhicule selon la revendication 12, dans lequel le dispositif de détermination de disposition (11) est conçu pour mettre en œuvre le procédé selon la revendication 1,
**caractérisé en ce que** la fonction de conduite automatique est mise en œuvre par le dispositif de détermination de disposition (11) sur la base de l'hypothèse de disposition de voies de circulation mise à jour.

FIG. 1

FIG. 2

FIG. 3

$$P(x_1, x_2, x_3, x_4,)$$

$$= \frac{1}{Z} \Psi_1 (x_1, x_2, x_3)$$

$$\Psi_2 (x_2, x_4) \Psi_3 (x_4)$$

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011120497 A1

- DE 102010033729 B4

**In der Beschreibung aufgeführte Nicht-Patentliteratur**

- **VON TAO WU** ; **ANANTH RANGANATHAN**. Vehicle localization using road markings. *IEEE Intelligent Vehicles Symposium (IV)*, 23 June 2013, ISSN 1931-0587, DOI: 10.1109/IVS.2013.6629627, 1185-1190